# EUROPÄISCHE PATENTSCHRIFT

(11) **EP 4 121 710 B1**
(45) Veröffentlichungstag und Bekanntmachung des Hinweises auf die Patenterteilung: **13.05.2026**
(21) Anmeldenummer: 21707945.8
(22) Anmeldetag: 10.03.2021
(51) Int. Cl.: F28D 20/02, F28D 20/00

(54) **WÄRMESPEICHERVORRICHTUNG**
HEAT ACCUMULATOR DEVICE
DISPOSITIF ACCUMULATEUR THERMIQUE

(30) Priorität: 18.03.2020 DE 102020107464
(43) Veröffentlichungstag der Anmeldung: 25.01.2023
(73) Patentinhaber: Deutsches Zentrum für Luft- und Raumfahrt e.V., 53227 Bonn (DE)
(72) Erfinder: KRAFT, Werner, 70565 Stuttgart (DE); VETTER, Peter, 70178 Stuttgart (DE); STAHL, Veronika, 71229 Leonberg (DE)
(74) Vertreter: RPK Patentanwälte Reinhardt und Kaufmann Partnerschaft mbB
(86) Internationale Anmeldenummer: PCT/EP2021/054390
(87) Internationale Veröffentlichungsnummer: WO 2021/185536

(56) Entgegenhaltungen:
- EP-A1- 3 002 528
- WO-A1-2012/123853
- WO-A2-2011/031894
- WO-A2-2011/058383
- DE-A1- 102019 118 142
- US-A1- 2011 083 436
- US-B1- 6 397 618

## Beschreibung

### Stand der Technik

Die Erfindung betrifft eine Wärmespeichervorrichtung mit einem metallischen Phasenwechselmaterial als Speichermaterial.

Aus der Literatur ist der Einsatz thermischer Energiespeicher auf Basis metallischer Phasenwechselmaterialien bekannt. Diese sind überwiegend im Bereich der Anwendung solarthermischer Kraftwerke angesiedelt. Weitere Anwendungen liegen im Bereich von Speicheröfen zur Gebäudebeheizung, im Bereich konventioneller Dampfkraftwerke (Kohlekraftwerk, Kernkraftwerk), für die Anwendung in Katalysatoren von Fahrzeugen mit Verbrennungsmotor, für die Anwendung in thermoelektrischen Generatoren in Fahrzeugen mit Verbrennungsmotor sowie im Bereich der Wärmerückgewinnung in der Stahlerzeugung. Typischerweise handelt es sich bei den in der Literatur dargestellten Konzepten um experimentelle Aufbauten im Labormaßstab. Weiterhin wurde die Anwendung in Fahrzeugen, insbesondere in batterieelektrischen Bussen und PKW, beschrieben.

Aus der EP 3 002 528 A1 ist ein Wärmespeicher und ein Verfahren zum Betreiben eines Wärmespeichers bekannt, der die Merkmale des Oberbegriffs vom Anspruch 1 aufweist. Der Wärmespeicher umfasst eine Einhausung mit einem in der Einhausung aufgenommenen metallischen Wärmespeichermedium, einen Wärmetauscher und eine elektrische Heizeinrichtung. Die elektrische Heizeinrichtung erhitzt im Betrieb das Wärmespeichermedium. Hierbei sind Aufnahmeröhren innerhalb der Einhausung angeordnet und von Wärmespeichermedium umgeben. Die elektrische Heizeinrichtung ist innerhalb der Aufnahmeröhren angeordnet. Der Wärmetauscher umfasst Rohre, in welchen ein Wärmeträgerfluid fließt, welches Wärme aus dem Wärmespeichermedium aufnimmt. Hierbei ist der Wärmetauscher an einer Unterseite der Einhausung angeordnet. Zusätzlich kann der Wärmetauscher seitlich an der Einhausung angeordnet sein.

Aus der WO 2011 031 894 A2 ist ein Wärmespeicher mit einem metallischen Speichermedium bekannt. Der Wärmespeicher umfasst eine Einhausung, in welcher ein metallisches Wärmespeichermedium angeordnet ist. In die Einhausung ragen erste Endbereiche von Metallstäben. Die zweiten Endbereiche der Metallstäbe ragen aus der Einhausung heraus. Der Endbereich, welcher aus der Einhausung herausragt, ragt in einen Kanal, in welchem ein Fluid strömt, so dass das Fluid über die Metallstäbe thermisch mit dem Speichermedium in der Einhausung gekoppelt ist. Erste Metallstäbe ragen in einen Kanal mit einem erhitzten Fluid. Zweite Metallstäbe ragen in einen Kanal mit kühlem Fluid. Dadurch tragen die ersten Metallstäbe thermische Energie in das Speichermedium ein und zweite Metallstäbe tagen thermische Energie aus dem Speichermedium aus.

Aus der WO 2012 123853 A1 ist eine thermische Speichereinrichtung zur Speicherung thermischer Energie bei erhöhter Temperatur bekannt. Die Anlage umfasst eine Einhausung zur Aufnahme eines thermischen metallischen Speichermediums; primäre Wärmeübertragungsflächen, zum Übertragen von Wärme von einer zirkulierenden Wärmeübertragungsflüssigkeit; und sekundäre Wärmeübertragungsflächen, zum Übertragen von Wärme aus dem thermischen Speichermedium zu Dampfrohren. Das thermische Speichermedium ist zwischen den primären Wärmeübertragungsflächen und den sekundären Wärmeübertragungsflächen angeordnet.

Aus der US 2011/083436 A1 ist eine Vorrichtung bekannt, welche einen Sicherheitsbehälter einen Wärmeaufnahmebereich und einen Wärmeübertragungsbereich umfasst. Über die Wärmeübertragungsbereiche kann Wärme über einen Boden des Sicherheitsbehälters in den Sicherheitsbehälter eingeleitet werden. Über die Wärmeaufnahmebereiche im Innenraum des Sicherheitsbehälters kann die Wärme aus dem Sicherheitsbehälter ausgeleitet werden. Alternativ können Wärmeübertragungsbereiche und Wärmeaufnahmebereiche im Innenraum des Sicherheitsbehälters angeordnet sein.

### Offenbarung der Erfindung

Die Aufgabe der Erfindung ist, eine Wärmespeichervorrichtung mit einem metallischen Phasenwechselmaterial als Speichermaterial anzugeben, welche eine effektive Wärmespeicherung mit einem effektiven Wärmeeintrag und effektiven Wärmeaustrag ermöglicht.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und der Zeichnung.

Es wird eine Wärmespeichervorrichtung mit einem metallischen Phasenwechselmaterial als Speichermaterial vorgeschlagen, umfassend wenigstens eine Aufnahmekammer mit einem Aufnahmeraum für das Speichermaterial und eine Einhausung für den Aufnahmeraum, wenigstens eine Wärmeeintrageeinrichtung zum Eintragen von Wärme in die wenigstens eine Aufnahmekammer, und wenigstens eine Wärmeaustrageeinrichtung zum Austragen von Wärme aus der wenigstens einen Aufnahmekammer.

Erfindungsgemäß ist ein zur thermischen Kopplung mit dem Speichermaterial vorgesehener Kopplungsbereich der Wärmeeintrageeinrichtung und/oder ein zur thermischen Kopplung mit dem Speichermaterial vorgesehener Kopplungsbereich der Wärmeaustrageeinrichtung zum Speichermaterial zumindest bereichsweise beabstandet angeordnet.

Zudem sind der Kopplungsbereich der Wärmeeintrageeinrichtung und der Kopplungsbereich der Wärmeaustrageeinrichtung außerhalb des Aufnahmeraums an einem Boden der Einhausung angeordnet, wobei der Kopplungsbereich der Wärmeeintrageeinrichtung und/oder der Wärmeaustrageeinrichtung über mindestens ein Wärmebrückenelement thermisch mit dem Speichermaterial gekoppelt ist, wobei die Einhausung das mindestens eine Wärmebrückenelement aufweist.

Alternativ sind der Kopplungsbereich von Wärmeeintrageeinrichtung und Wärmeaustrageeinrichtung in einem Gehäuse angeordnet, wobei das Gehäuse wenigstens bereichsweise innerhalb der Aufnahmekammer und/oder dem Aufnahmeraum angeordnet ist.

Mit der erfindungsgemäßen Wärmespeichervorrichtung kann eine Hochtemperatur-Wärmespeicherung realisiert werden. Insbesondere erfolgt die Wärmespeicherung mit dem metallischen Phasenwechselmaterial, auch als mPCM bekannt, über latente Wärme und sensible Wärme. Beim Phasenübergang kann das metallische Phasenwechselmaterial ohne Temperaturänderung in fester Phase thermische Energie aufnehmen, bis das metallische Phasenwechselmaterial vollständig geschmolzen ist oder in flüssiger Phase thermische Energie abgeben, bis das metallische Phasenwechselmaterial vollständig erstarrt ist.

Über das metallische Phasenwechselmaterial lässt sich Wärme und insbesondere latente und sensible Wärme für einen längeren Zeitraum speichern. Insbesondere kann Wärme auf einem hohen Temperaturniveau gespeichert werden, welches beispielsweise bei mindestens 100°C, vorzugsweise bei mindestens 500°C und insbesondere bei ca. 600°C bis 650°C liegt. Es lässt sich, abhängig von der Art des metallischen Phasenwechselmaterials (mPCM), Wärme auf einem Temperaturniveau von bis zu 1500°C speichern. Beispielsweise kann reines Silizium mit einer Phasenwechseltemperatur von 1414°C oder SiB₃ mit einer Phasenwechseltemperatur von 1385°C eingesetzt werden.

Das metallische Phasenwechselmaterial liegt je nach thermischem Beladungszustand im flüssigen Zustand oder festen Zustand vor. Ein günstiges Phasenwechselmaterial ist beispielsweise AlSi₁₂.

Wird beispielsweise AlSi₁₂ als metallisches Phasenwechselmaterial im Temperaturintervall von 25°C bis 600°C genutzt, so besitzt dieses eine Energiedichte von ca. 300 Wh/kg bzw. ca. 795 Wh/I.

Typische in der Literatur genannte metallische Phasenwechselmaterialien besitzen hohe Massenanteile der Elemente Aluminium, Magnesium oder Zink. Ein typisches Merkmal von Phasenwechselmaterialien allgemein und damit auch von metallischen Phasenwechselmaterialien ist die Volumenänderung über dem Phasenwechsel. Weiterhin besitzen metallische Phasenwechselmaterialien mit hohen Anteilen von Aluminium, Magnesium oder Zink relativ hohe thermische Ausdehnungskoeffizienten in der Größenordnung ca. 20 bis 30 * 10⁻⁶ 1/K, v.a. auch im Vergleich zu den typischerweise zum Aufbau von Wärmespeichervorrichtung verwendeten anderweitigen Materialien, beispielsweise für die Einhausung oder elektrischer Heizer wie z.B. Edelstähle, Graphit oder Keramiken.

Während der Beladung eines Wärmespeichers auf Basis metallischer Phasenwechselmaterialien kommt es zunächst zum Temperaturanstieg im Speichermaterial sowie anschließend mit Erreichen der Schmelztemperatur zum Aufschmelzen des Speichermaterials. Während der Erwärmung des Speichermaterials kommt es zur Ausdehnung des in der festen Phase vorliegenden Speichermaterials, während des Schmelzvorgangs zur Ausdehnung über dem Phasenwechsel. Bei der Entladung laufen diese Prozesse in entgegengesetzter Reihenfolge ab, d.h. es kommt zur Volumenverringerung während des Phasenwechsels sowie zur Kontraktion während des Abkühlprozesses.

Aufgrund der Volumenänderung während des Phasenwechsels kann es v.a. in den zuletzt erstarrenden Bereichen des Speichermaterials des Wärmespeichers zur Bildung von Lunkern (Materialdefekte mit Unterdruck bzw. Vakuum) kommen. Ebenfalls können sich Poren (Materialdefekte mit Gaseinschluss) bevorzugt in zuletzt erstarrenden Bereichen des Speichermaterials befinden.

Über der Abkühlung kommt es im Speichermaterial typischerweise zu einer stärkeren Schrumpfung im Vergleich zu den übrigen Komponenten wie z.B. elektrische Heizer oder Einhausung. Ursächlich hierfür ist der hohe thermische Ausdehnungskoeffizient der Speichermaterialien.

Durch beide Effekte kann es zu einer nachteiligen Veränderung des thermischen Kontaktes zwischen Speichermaterial und Wärmeeintrageeinrichtung, bzw. Wärmeaustrageeinrichtung kommen. Neben der Leistungsfähigkeit kann hierdurch insbesondere beim Einsatz elektrischer Widerstandsheizer auch die Lebensdauer der Komponenten nachteilig beeinflusst werden. Diese Effekte können auftreten, sofern die physikalischen Grundlagen bei der Bildung von Materialdefekten bei der Anordnung der Komponenten nicht berücksichtigt werden.

Nach einer günstigen Ausgestaltung kann eine Anordnung der Wärmeeintrageeinrichtung und der Wärmeaustrageeinrichtung zur Sicherstellung eines thermischen Kontakts zwischen der Wärmeeintrageeinrichtung und dem Speichermaterialsowie zwischen der Wärmeaustrageeinrichtung und dem Speichermaterial so gewählt sein, dass bei bestimmungsgemäßem Gebrauch der Wärmespeichervorrichtung eine Bildung von Lunkern und/oder Poren entfernt von Wärmeeintrageeinrichtung und Wärmeaustrageeinrichtung in zuletzt erstarrenden Bereichen des Speichermaterials erfolgt. Dadurch kann eine nachteilige Veränderung des thermischen Kontaktes zwischen Speichermaterial und Wärmeeintrageeinrichtung, bzw. Wärmeaustrageeinrichtung erschwert oder verhindert werden. Dadurch kann die Lebensdauer der Komponenten positiv beeinflusst werden.

Gegenüber dem Stand der Technik weist die erfindungsgemäße Wärmespeichervorrichtung eine günstige Anordnung der Wärmeeintrageeinrichtung und der Wärmeaustrageeinrichtung auf, sodass Lunker nicht an der Wärmeeintrageeinrichtung insbesondere nicht am Kopplungsbereich und der Wärmeaustrageeinrichtung insbesondere nicht am Kopplungsbereich entstehen.

Vorteilhaft kann die Anordnung von Wärmeeintrageeinrichtung und Wärmeaustrageeinrichtung so gewählt werden, dass die Schwerkraft einen positiven Einfluss auf die Bildung von Lunkern und Poren nimmt.

Nach einer günstigen Ausgestaltung kann die Sicherstellung des thermischen Kontaktes zwischen Wärmeeintrageeinrichtung, bzw. Wärmeaustrageeinrichtung und dem Speichermaterial vorteilhaft durch eine geschickte Anordnung dieser Komponenten zueinander im Speichersystem, insbesondere im Speichermaterial, erreicht werden. Berücksichtigt werden hierbei die von der Wärmeaustrageeinrichtung ausgehende Erstarrung des Speichermaterials in Verbindung mit der einhergehenden Volumenverringerung sowie die resultierenden Effekte aufgrund der unterschiedlichen thermischen Ausdehnungskoeffizienten der verwendeten Komponenten. Weiterhin wird der Einfluss von Einbauten im Speichermaterial auf die effektive thermische Leitfähigkeit innerhalb der Wärmespeichervorrichtung und des damit verbundenen Einflusses auf die Erstarrung des Speichermaterials berücksichtigt.

Weiter kann die Anordnung von Wärmeeintrageeinrichtung und Wärmeaustrageeinrichtung so gewählt werden, dass aufgrund der thermischen Ausdehnungskoeffizienten zwischen Speichermaterial und Wärmeeintrageeinrichtung, bzw. Wärmeaustrageeinrichtung der thermische Kontakt zwischen diesen zusätzlich verbessert wird.

Vorteilhaft kann das Phasenwechselmaterial einen größeren thermischen Ausdehnungskoeffizienten aufweisen als ein Material der Einhausung.

Nach einer günstigen Ausgestaltung kann die Einhausung des Speichermaterials aus faserverstärktem Keramikmaterial gebildet sein. Insbesondere kann die Einhausung aus einem faserverstärkten nicht-oxidischen Keramikmaterial gebildet sein. Das faserverstärkte nicht-oxidische Keramikmaterial kann insbesondere aus kohlefaserverstärktem Kohlenstoff und/oder kohlefaserverstärktem Siliziumkarbid und/oder siliziumkarbidfaserverstärktem Kohlenstoff und/oder siliziumkarbidfaserverstärktem Siliziumkarbid (SiC) gebildet sein. Ein solches Material weist einen sehr geringen thermischen Ausdehnungskoeffizienten auf. Über die Faserverstärkung lassen sich dünne Wände realisieren.

Andere mögliche Einhausungsmaterialien sind Keramik, beispielsweise Aluminiumoxid, Zirkonoxid, Bornitrid, Siliziumoxid, Aluminiumnitrid, Siliziumkarbid, Borcarbid, und dergleichen, und/oder eine solche Keramik als funktionale Schicht auf einem beispielsweise metallischen Substrat, und/oder Graphit oder Graphit als funktionale Schicht und/oder oberflächenbehandelte Metalle wie beispielsweise borierter Edelstahl, und/oder temperaturbehandelter Edelstahl und/oder Kompositwerkstoffe wie faserverstärkte Keramik mit einer Keramikfaser wie C oder Al₂O₃ und/oder partikelverstärkte Keramik, wie beispielsweise WC.

Damit lässt sich auf einfache Weise ein verringerter thermischer Ausdehnungskoeffizient im Vergleich zu dem metallischen Phasenwechselmaterial erreichen. Die Einhausung kann vorteilhaft in Leichtbauweise realisiert werden. Über eine Faserverstärkung lassen sich besonders dünne Wände der Einhausung ausbilden.

Eine entsprechende Einhausung lässt sich dadurch auf vorteilhafte Weise für die Aufnahme von Materialien verwenden, wenn wiederholt eine Erhitzung eines entsprechenden aufgenommenen Materials unter hohen Heizraten und eine Abkühlung unter hohen Kühlraten erfolgen soll.

Günstig sind Einhausungsmaterialien mit hoher Thermoschockbeständigkeit hoher Oxidationsbeständigkeit, hoher mechanischer Stabilität und insbesondere hoher Korrosionsbeständigkeit. Es lässt sich eine langzeitstabile Einhausung von Phasenwechselmaterialien erreichen, welche mindestens zeitweise Metallschmelzen sind.

Durch die Einhausung mit entsprechendem Wandungsmaterial können Metallschmelzen langzeitstabil eingehaust werden.

Es ergibt sich eine hohe Korrosionsresistenz. Dadurch kann die Einhausung im Zusammenhang mit Metallschmelzen eingesetzt werden, deren Temperatur im Bereich beispielsweise bis ca. 600°C oder 650°C oder sogar bis 1500°C liegen kann.

Grundsätzlich kann die durch die Einhausung aufgenommene Metallschmelze ständig im flüssigen Zustand vorliegen, oder sie kann nur zeitweise im flüssigen Zustand vorliegen. Beispielsweise nimmt die Einhausung ein metallisches Phasenwechselmaterial auf, welches beispielsweise bei thermischer Beladung im flüssigen Zustand vorliegt und nach thermischer Entladung im festen Zustand vorliegt. Es lässt sich dann beispielsweise sowohl latente als auch sensible Wärme speichern.

Günstig ist es, wenn eine Wandstärke eines Wandungsbereichs aus dem Wandungsmaterial der Einhausung aus faserverstärktem SiC-Material mindestens 1 mm, insbesondere mindestens 2 mm und mindestens insbesondere 2,5 mm beträgt und beispielsweise bei ca. 3 mm liegt. Vorzugsweise liegt die Wandstärke bei höchstens 5 mm. Es lässt sich so eine mechanisch stabile Wandung bereitstellen, wobei eine hohe Thermoschockbeständigkeit erreicht ist. Ferner lässt sich die Wandstärke relativ gering halten, so dass sich die Behältervorrichtung mit kleinem Gewicht ausbilden lässt.

Die Einhausung kann mit einer geeigneten Wärmeisolierung ummantelt sein. Die Isolierung kann als Wärmedämmung beispielsweise pyrogenes Siliziumdioxid aufweisen. Andere Materialien, wie etwa Mineralwolle, Calciumsilikat, Keramikfaser (z.B. Calcium-Magnesium-Silikate), Glimmer, oder auch Vakuumdämmung, können ebenso vorteilhaft eingesetzt werden. Auch andere Materialien, die zwar eine höhere Wärmeleitfähigkeit aufweisen, dafür aber preiswerter sind, können optional eingesetzt werden.

Nach einer günstigen Ausgestaltung kann der Kopplungsbereich der Wärmeeintrageeinrichtung und/oder der Wärmeaustrageeinrichtung wenigstens bereichsweise außerhalb des Aufnahmeraums angeordnet sein. Insbesondere kann der Kopplungsbereich der Wärmeeintrageeinrichtung und/oder der Wärmeaustrageeinrichtung wenigstens bereichsweise außerhalb der Aufnahmekammer angeordnet sein.

Nach einer günstigen Ausgestaltung kann der Kopplungsbereich der Wärmeeintrageeinrichtung und der Kopplungsbereich der Wärmeaustrageeinrichtung außerhalb des Aufnahmeraums an einem Boden der Einhausung angeordnet sein. Der Kopplungsbereich der Wärmeeintrageeinrichtung und/oder der Wärmeaustrageeinrichtung kann über mindestens ein Wärmebrückenelement thermisch mit dem Speichermaterial gekoppelt sein, wobei die Einhausung das mindestens eine Wärmebrückenelement aufweist, insbesondere wobei das mindestens eine Wärmebrückenelement an einer Bodenplatte der Einhausung angeordnet oder in die Bodenplatte integriert ist, oder die Bodenplatte realisiert.

In diesem Ausführungsbeispiel können sich sowohl die Wärmeeintrageeinrichtung insbesondere deren Kopplungsbereich als auch die Wärmeaustrageeinrichtung insbesondere deren Kopplungsbereich in der Bodenfläche der Wärmespeichervorrichtung, insbesondere der Aufnahmekammer der Wärmespeichervorrichtung, befinden.

Auf diese Weise können Wärmeeintrageeinrichtung und Wärmeaustrageeinrichtung direkt in Strukturelemente der Einhausung wie der Bodenplatte integriert werden. Die Komponenten werden damit nicht direkt in die Aufnahmekammer des Speichermaterials eingebracht. Durch die Anbringung der Wärmeaustrageeinrichtung am Boden erfolgt der Erstarrungsprozess bei der Abkühlung ausgehend von der Bodenfläche. Außerdem begünstigt die Schwerkraft ebenfalls eine Erstarrung zur Bodenfläche hin. Da die Wärmeeintrageeinrichtung ebenfalls an der Bodenfläche angebracht wird, ist diese in gutem thermischen Kontakt zum Speichermaterial.

Dadurch können die Wärmeeintrageeinrichtung insbesondere deren Kopplungsbereich und die Wärmeaustrageeinrichtung insbesondere deren Kopplungsbereich indirekt verbunden sein. Die beiden Komponenten stehen dabei nicht in Materialkontakt, sondern nur mittelbar über das Wärmebrückenelement in thermischem Kontakt mit dem Speichermaterial. Dadurch können auch keine unerwünschten chemische Reaktion zwischen Wärmeeintrageeinrichtung und/oder Wärmeaustrageeinrichtung und dem Speichermaterial wie beispielsweise Korrosion auftreten.

Nach einer günstigen Ausgestaltung kann der Kopplungsbereich der Wärmeeintrageeinrichtung und/oder der Wärmeaustrageeinrichtung wenigstens bereichsweise innerhalb des Aufnahmeraums angeordnet sein. Insbesondere kann der Kopplungsbereich der Wärmeeintrageeinrichtung und/oder der Wärmeaustrageeinrichtung wenigstens bereichsweise innerhalb der Aufnahmekammer angeordnet sein.

Nach einer alternativen nicht umfassten Ausgestaltung kann der Kopplungsbereich der Wärmeeintrageeinrichtung außerhalb des Aufnahmeraums an einem Boden der Einhausung angeordnet sein und der Kopplungsbereich der Wärmeaustrageeinrichtung kann wenigstens bereichsweise innerhalb des Aufnahmeraums angeordnet sein, insbesondere wenigstens bereichsweise innerhalb der Aufnahmekammer angeordnet sein. Alternativ kann der Kopplungsbereich der Wärmeaustrageeinrichtung außerhalb des Aufnahmeraums an einem Boden der Einhausung angeordnet sein und der Kopplungsbereich der Wärmeeintrageeinrichtung kann wenigstens bereichsweise innerhalb des Aufnahmeraums angeordnet sein, insbesondere wenigstens bereichsweise innerhalb der Aufnahmekammer angeordnet sein. Hierbei können der Kopplungsbereich der Wärmeeintrageeinrichtung und/oder der Wärmeaustrageeinrichtung über mindestens ein Wärmebrückenelement thermisch mit dem Speichermaterial gekoppelt sein.

Beispielsweise können sich die Wärmeeintrageeinrichtung im Speichermaterial, die Wärmeaustrageeinrichtung an der Bodenfläche der Wärmespeichervorrichtung, insbesondere der Aufnahmekammer der Wärmespeichervorrichtung, befinden. Durch die Anbringung der Wärmeaustrageeinrichtung am Boden erfolgt der Erstarrungsprozess bei der Abkühlung ausgehend von der Bodenfläche. Außerdem begünstigt die Schwerkraft ebenfalls eine Erstarrung zur Bodenfläche hin. Die Wärmeeintrageeinrichtung kann günstigerweise innerhalb des Speichermaterials weitgehend senkrecht zur Wärmeaustrageeinrichtung angebracht werden.

Hierdurch kann diese vorteilhaft parallel zur Richtung des Wärmeaustrags und damit parallel zur Erstarrungsrichtung angeordnet sein. Insbesondere ist die Richtung der Erstarrung ausschlaggebend, die wiederum von der Wärmeaustragsrichtung und damit auch von der Wärmeaustrageeinrichtung abhängig ist. Hierdurch kann die Bildung von Materialdefekten auf der von der Wärmeaustrageeinrichtung abgewandten Seite der Wärmeeintrageeinrichtung vermieden werden.

In einem weiteren alternativen nicht umfassten Ausführungsbeispiel können Wärmeeintrageeinrichtung und Wärmeaustrageeinrichtung auch vertauscht angeordnet sein. Auch dadurch lassen sich günstige Effekte bei der Erstarrung des Speichermaterials erzielen. Durch die Anbringung der Wärmeaustrageeinrichtung im Speichermaterial erfolgt der Erstarrungsprozess ausgehend von diesem. Die Richtung der Schwerkraft begünstigt eine Kontaktierung zur Bodenfläche hin.

Nach einer günstigen Ausgestaltung kann der Kopplungsbereich von Wärmeeintrageeinrichtung und/oder Wärmeaustrageeinrichtung über mindestens ein Wärmebrückenelement thermisch mit dem Speichermaterial gekoppelt sein. In diesem Ausführungsbeispiel können die Wärmeeintrageeinrichtung und die Wärmeaustrageeinrichtung indirekt verbunden sein. Die beiden Komponenten stehen dabei nicht in Materialkontakt, sondern nur mittelbar über das Wärmebrückenelement in thermischem Kontakt mit dem Speichermaterial. Dadurch können auch keine unerwünschten chemische Reaktion zwischen Wärmeeintrageeinrichtung und/oder Wärmeaustrageeinrichtung und dem Speichermaterial wie beispielsweise Korrosion auftreten.

Nach einer günstigen Ausgestaltung kann die Einhausung das mindestens eine Wärmebrückenelement aufweisen. Insbesondere kann das mindestens eine Wärmebrückenelement an einem Außenmantel der Einhausung, insbesondere an einer Bodenplatte der Einhausung angeordnet oder in die Bodenplatte integriert sein. Auf diese Weise können Wärmeeintrageeinrichtung und Wärmeaustrageeinrichtung direkt in Strukturelemente der Einhausung wie der Bodenplatte integriert werden.

Nach einer alternativen Ausgestaltung können der Kopplungsbereich der Wärmeeintrageeinrichtung und der Kopplungsbereich der Wärmeaustrageeinrichtung wenigstens bereichsweise innerhalb des Aufnahmeraums angeordnet sein, insbesondere wenigstens bereichsweise innerhalb der Aufnahmekammer angeordnet sein. Der Kopplungsbereich der Wärmeeintrageeinrichtung und/oder der Wärmeaustrageeinrichtung kann über mindestens ein Wärmebrückenelement thermisch mit dem Speichermaterial gekoppelt sei, wobei das mindestens eine Wärmebrückenelement im Aufnahmeraum angeordnet sein kann.

In einem Ausführungsbeispiel können die Wärmeeintrageeinrichtung und die Wärmeaustrageeinrichtung indirekt verbunden sein. Die beiden Komponenten stehen dabei nicht in Materialkontakt, sondern nur mittelbar über das Wärmebrückenelement in thermischem Kontakt mit dem Speichermaterial. Dadurch können auch keine unerwünschten chemische Reaktion zwischen Wärmeeintrageeinrichtung und/oder Wärmeaustrageeinrichtung und dem Speichermaterial wie beispielsweise Korrosion auftreten.

Nach einer günstigen Ausgestaltung kann mindestens ein Wärmebrückenelement im Aufnahmeraum angeordnet sein. Das Wärmebrückenelement kann vorteilhaft die Zufuhr von Wärme in das metallische Phasenwechselmaterial oder die Abgabe von Wärme aus dem metallischen Phasenwechselmaterial ermöglichen und für stabile thermische Verhältnisse sorgen. Das Wärmebrückenelement kann beispielsweise Wärmeleitrippen aufweisen, die in das Phasenwechselmaterial hineinragen.

Bei dieser Ausführungsform werden Wärmeeintrageeinrichtung und Wärmeaustrageeinrichtung nicht direkt in das Speichermaterial eingebracht, sondern in ein Gehäuse als Wärmebrückenelement, der wiederum in das Speichermaterial eingebracht ist. Hierdurch brauchen Wärmeeintrageeinrichtung und Wärmeaustrageeinrichtung selbst nicht werkstoffverträglich mit dem Speichermaterial ausgeführt sein. Lediglich das Gehäuse muss eine Werkstoffverträglichkeit gegenüber dem Speichermaterial aufweisen.

Durch die Einbringung von Wärmeeintrageeinrichtung und Wärmeaustrageeinrichtung in dem gleichen Gehäuse erfolgt stets eine Erstarrung des Speichermaterials um das Gehäuse herum. Hierdurch ist sowohl für die Wärmeeintrageeinrichtung als auch für die Wärmeaustrageeinrichtung ein guter thermischer Kontakt mit dem Speichermaterial sichergestellt.

Nach einer günstigen Ausgestaltung kann das Speichermaterial eine metallische Legierung umfassen, mit einem oder mehreren der Bestandteile Aluminium, Silizium, Kupfer, Magnesium, Zink, Germanium, insbesondere eine AISi-Legierung, bevorzugt AlSi12.

Vorteilhaft kann das Phasenwechselmaterial eine metallische Legierung oder halbmetallische Legierung umfassen mit einem oder mehreren der Bestandteile Aluminium, Silizium, Kupfer, Magnesium, Bor, Zink, insbesondere eine AISi-Legierung, bevorzugt AlSi₁₂. Günstige Legierungen sind eutektische Legierungen und intermetallische Verbindungen, beispielsweise verschiedene Silizide, bei denen der Phasenwechsel unter Aufnahme oder Abgabe latenter Wärme stattfindet.

Weiterhin günstig sind insbesondere binäre Legierungen oder ternäre Legierungen und Legierungssysteme mit mehr als drei Komponenten, mit einer eutektischen Zusammensetzung oder einer intermetallischen Zusammensetzung mit wenigstens einer der oben genannten Komponenten Al, Si, Cu, Mg, B, Zn.

Nach einer günstigen Ausgestaltung kann die Wärmeeintrageeinrichtung wenigstens eine Heizeinrichtung aufweisen. Insbesondere kann die Heizeinrichtung eine elektrische Widerstandsheizung oder induktive Heizung aufweisen. Alternativ kann die Wärmeeintrageeinrichtung mit einer Heizeinrichtung gekoppelt sein. Es lässt sich so auf einfache Weise eine thermische Beladung erreichen. Zum Wärmeeintrag muss beispielsweise kein Wärmeübertragungsmedium die Aufnahmekammer durchströmen. Beispielsweise lässt sich eine thermische Beladung erreichen, indem eine elektrische Beaufschlagung der Heizeinrichtung erfolgt. Die Wärme aus der Wärmespeichervorrichtung lässt sich dann an einer Anwendung beispielsweise zu Heizzwecken direkt nutzen.

Nach einer günstigen Ausgestaltung kann die Wärmeaustrageeinrichtung von einem Wärmeübertragungsmedium durchströmt sein. Insbesondere kann die Wärmeaustrageeinrichtung wenigstens ein Rohr umfassen oder damit verbunden sein, welches von einem Wärmeübertragungsmedium durchströmt ist. Ein Querschnitt des Rohres kann rund, eckig, quadratisch sein. Bei einem kreisförmigen Querschnitt ergibt sich ein hoher Symmetriegrad. Bei einem rechteckförmigen Querschnitt ergibt sich eine große Oberfläche. Auch kann das Rohr als hohles Flachelement ausgebildet sein. Das Wärmeübertragungsmedium kann so zu einem Wärmetauscher transportiert werden, wo das Medium auf geeignete Weise die transportierte Wärme abgeben kann. Die Wärmespeichervorrichtung lässt sich entladen. Diese Wärme kann dann an einem Ort beabstandet zu der Aufnahmekammer genutzt werden.

Nach einer günstigen Ausgestaltung kann der Kopplungsbereich der Wärmeeintrageeinrichtung an einer von der Einhausung abgewandten Seite des Kopplungsbereichs der Wärmeaustrageeinrichtung angeordnet sein. Der Kopplungsbereich der Wärmeaustrageeinrichtung kann auch an einer von der Einhausung abgewandten Seite des Kopplungsbereichs der Wärmeeintrageeinrichtung angeordnet sein. Beispielsweise kann so die Wärmeeintrageeinrichtung direkt an der Bodenplatte der Einhausung angeordnet sein, während die Wärmeaustrageeinrichtung an der Wärmeeintrageeinrichtung angeordnet ist. Die Wärme wird dann beim Entladen durch die Wärmeeintrageeinrichtung zu der Wärmeaustrageeinrichtung transportiert.

Nach günstigen Ausgestaltungen kann die Wärmeeintrageeinrichtung wenigstens ein Element mit dem Kopplungsbereich aufweisen, mit wenigstens einer der Ausgestaltungen:
der Kopplungsbereich kann im Wesentlichen eine gesamte Länge des Elements in dem Aufnahmeraum und/oder einen gesamten Umfang des Elements und/oder einen gesamten Umfang des Elements in dem Aufnahmeraum umfassen;
der Kopplungsbereich kann sich über mindestens 50%, insbesondere über mindestens 60% einer gesamten Höhe des Aufnahmeraums erstrecken;
das Element oder der Kopplungsbereich des Elements kann beabstandet zu der Einhausung sein. Insbesondere kann ein Ende des Elements beabstandet zu einem Deckel und/oder Boden der Einhausung sein;
das Element oder der Kopplungsbereich des Elements kann parallel zu einem Element der Wärmeaustrageeinrichtung ausgerichtet sein;
das Element oder der Kopplungsbereich des Elements kann parallel zu einer Höhenachse oder Symmetrieachse des Aufnahmeraums ausgerichtet sein;
das Element oder der Kopplungsbereich des Elements kann zentral in dem Aufnahmeraum angeordnet sein und insbesondere an einer Symmetrieachse des Aufnahmeraums liegen.

Die Wärmeeintrageeinrichtung kann auf diese Weise aus einzelnen Elementen gebildet sein, welche Wärme auf günstige Weise in das Speichermaterial eintragen.

Über das mindestens eine Element lässt sich insbesondere direkt Wärme in das Speichermaterial einkoppeln. Es lässt sich beispielsweise ein Phasenübergang von fest in flüssig erreichen. Es kann dann in dem Speichermaterial latente und sensible Wärme gespeichert werden.

Durch die Erstreckung über im Wesentlichen die gesamte Länge/des gesamten Umfangs und/oder über die gesamte Oberfläche ergibt sich ein effektiver Wärmeeintrag im Speichermaterial. Elektrische Heizer weisen oft an einem Anfangsbereich und/oder Endbereich Totzonen für die Heizung auf. Aufgrund solcher konstruktiv bedingter Totzonen lässt sich in Folge nicht die gesamte Länge beheizen, sondern nur ein wesentlicher Teil davon.

Insbesondere ist das mindestens eine Element so angeordnet, dass es von Speichermaterial umgeben ist und beispielsweise auch zwischen einem Ende und einem Deckel und/oder Boden (vor allem flüssiges) Speichermaterial liegt. Dadurch lässt sich effektiv Wärme in das Speichermaterial einkoppeln und es ergibt sich eine effektive thermische Beladung der Wärmespeichervorrichtung. Festes Speichermaterial nimmt ein kleineres Volumen ein als flüssiges Speichermaterial. Durch die Beabstandung zu dem Deckel und/oder Boden wird erreicht, dass das mindestens eine Element nicht über Speichermaterial, auch im festen Zustand, hinausragt. Dadurch wird die Überhitzungsgefahr des mindestens einen Elements verringert.

Nach einer günstigen Ausgestaltung kann das wenigstens eine Element schräg, insbesondere senkrecht, zu einer Ausrichtung der wenigstens einen Wärmeaustrageeinrichtung, und/oder im bestimmungsgemäßen Arbeitszustand parallel zu einer Schwererichtung angeordnet sein. Weiter kann das wenigstens eine Element parallel zu einer Ausrichtung der wenigstens einen Wärmeaustrageeinrichtung angeordnet sein. Auf diese Weise lassen sich günstige Aufschmelzprozesse des Speichermaterials wie auch vorteilhafte Erstarrungsprozesse beim Austragen der Wärme erzielen. Außerdem begünstigt die Schwerkraft eine Erstarrung zur Bodenfläche hin. Die Wärmeeintrageeinrichtung kann günstigerweise innerhalb des Speichermaterials weitgehend senkrecht zur Wärmeaustrageeinrichtung angebracht werden. Hierdurch kann die Bildung von Materialdefekten auf der von der Wärmeaustrageeinrichtung abgewandten Seite der Wärmeeintrageeinrichtung vermieden werden.

Nach einer günstigen Ausgestaltung kann die Wärmeaustrageeinrichtung wenigstens ein Element mit dem Kopplungsbereich aufweisen, mit wenigstens einer der Ausgestaltungen:
der Kopplungsbereich kann im Wesentlichen eine gesamte Länge des Elements in dem Aufnahmeraum und/oder einen gesamten Umfang des Elements und/oder einen gesamten Umfang des Elements in dem Aufnahmeraum aufweisen;
der Kopplungsbereich kann sich über mindestens 50%, insbesondere über mindestens 60% einer gesamten Höhe des Aufnahmeraums erstrecken;
das Element oder der Kopplungsbereich des Elements kann beabstandet zu der Einhausung sein. Insbesondere kann ein Ende des Elements beabstandet zu einem Deckel und/oder Boden der Einhausung sein;
das Element oder der Kopplungsbereich des Elements kann parallel zu einem Element der Wärmeeintrageeinrichtung ausgerichtet sein;
das Element oder der Kopplungsbereich des Elements kann parallel zu einer Höhenachse oder Symmetrieachse des Aufnahmeraums ausgerichtet sein;
das Element oder der Kopplungsbereich des Elements kann zentral in dem Aufnahmeraum angeordnet sein und insbesondere an einer Symmetrieachse des Aufnahmeraums liegen.

Die Wärmeaustrageeinrichtung kann auf diese Weise aus einzelnen Elementen gebildet sein, welche Wärme auf günstige Weise aus dem Speichermaterial abführen können.

Nach einer günstigen Ausgestaltung kann das wenigstens eine Element als Rohr ausgebildet sein.

In diesem Ausführungsbeispiel kann die Wärmeaustrageeinrichtung im Speichermaterial und die Wärmeeintrageeinrichtung an der Bodenfläche der Wärmespeichervorrichtung, insbesondere der Aufnahmekammer der Wärmespeichervorrichtung, angeordnet sein. Durch die Anbringung der Wärmeaustrageeinrichtung im Speichermaterial erfolgt der Erstarrungsprozess ausgehend von diesem in das umgebende Speichermaterial hinein. Die Richtung der Schwerkraft begünstigt eine Kontaktierung zur Bodenfläche hin.

Nach einer günstigen Ausgestaltung kann das wenigstens eine Element zentral in dem Aufnahmeraum angeordnet sein und insbesondere entlang einer Symmetrieachse des Aufnahmeraums angeordnet sein. Auf diese Weise lassen sich günstige Aufschmelzprozesse des Speichermaterials wie auch vorteilhafte Erstarrungsprozesse beim Austragen der Wärme erzielen.

Nach einer günstigen Ausgestaltung kann die Wärmeeintrageeinrichtung in dem Aufnahmeraum wenigstens mit einem Abschnitt die Wärmeaustrageeinrichtung umgeben, insbesondere konzentrisch und/oder geschlossen umgeben. Insbesondere kann die Wärmeeintrageeinrichtung in thermischem Kontakt und/oder mechanischem Kontakt mit der Wärmeaustrageeinrichtung in dem Aufnahmeraum stehen. Hierdurch kann die Bildung von Materialdefekten auf der von der Wärmeaustrageeinrichtung abgewandten Seite der Wärmeeintrageeinrichtung vermieden werden. Es lässt sich über die Wärmeeintrageeinrichtung dann auch die Wärmeaustrageeinrichtung direkt beheizen.

Nach einer günstigen Ausgestaltung kann die Wärmeeintrageeinrichtung wenigstens teilweise in dem Aufnahmeraum beabstandet zu der Wärmeaustrageeinrichtung sein, wobei Speichermaterial zwischen der Wärmeeintrageeinrichtung und der Wärmeaustrageeinrichtung angeordnet ist. Auf diese Weise lassen sich günstige Aufschmelzprozesse des Speichermaterials wie auch vorteilhafte Erstarrungsprozesse beim Austragen der Wärme erzielen. Es lässt sich so effektiv eine thermische Beladung erreichen; insbesondere kann ein Wärmewiderstand relativ gering sein.

Nach einer günstigen Ausgestaltung kann der Kopplungsbereich von Wärmeeintrageeinrichtung und/oder Wärmeaustrageeinrichtung in einem Gehäuse angeordnet sein. Insbesondere kann das Gehäuse wenigstens bereichsweise innerhalb der Aufnahmekammer und/oder dem Aufnahmeraum angeordnet sein.

Bei dieser Ausführungsform werden Wärmeeintrageeinrichtung und/oder Wärmeaustrageeinrichtung nicht direkt in das Speichermaterial eingebracht, sondern in ein Gehäuse, das wiederum in das Speichermaterial eingebracht ist. Hierdurch brauchen Wärmeeintrageeinrichtung und/oder Wärmeaustrageeinrichtung selbst nicht werkstoffverträglich mit dem Speichermaterial ausgeführt sein.

Lediglich das Gehäuse muss eine Werkstoffverträglichkeit gegenüber dem Speichermaterial aufweisen. Durch die Einbringung von Wärmeeintrageeinrichtung und/oder Wärmeaustrageeinrichtung in dem gleichen Gehäuse kann eine Erstarrung des Speichermaterials um das Gehäuse herum stattfinden. Hierdurch ist sowohl für die Wärmeeintrageeinrichtung als auch für die Wärmeaustrageeinrichtung ein guter thermischer Kontakt mit dem Speichermaterial sichergestellt.

Nach einer günstigen Ausgestaltung kann in dem Gehäuse ein zentrales Element, insbesondere ein zentrales Rohr, der Wärmeaustrageeinrichtung angeordnet sein, und beabstandet zu dem Element Elemente der Wärmeeintrageeinrichtung angeordnet sein. Insbesondere können die Elemente der Wärmeeintrageeinrichtung spiegelsymmetrisch oder rotationssymmetrisch zu dem Element angeordnet sein.

Auf diese Weise lassen sich günstige Aufschmelzprozesse des Speichermaterials wie auch vorteilhafte Erstarrungsprozesse beim Austragen der Wärme erzielen.

Nach einer günstigen Ausgestaltung kann in dem Gehäuse zentral ein Element der Wärmeeintrageeinrichtung angeordnet sein, und beabstandet zu diesem Element eine Mehrzahl von Elementen, insbesondere von Rohren, der Wärmeaustrageeinrichtung positioniert sein. Insbesondere können die Elemente der Wärmeaustrageeinrichtung spiegelsymmetrisch oder rotationssymmetrisch zu dem Element der Wärmeeintrageeinrichtung angeordnet sein. Auch dadurch können Aufschmelzprozesse des Speichermaterials wie auch Erstarrungsprozesse beim Austragen der Wärme günstig beeinflusst werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in einer isometrischen Darstellung eine Wärmespeichervorrichtung mit flächig ausgedehnter Wärmeeintrageeinrichtung und flächig ausgedehnter Wärmeaustrageeinrichtung nach einem Ausführungsbeispiel der Erfindung;
- Fig. 2: in einer isometrischen Darstellung eine Wärmespeichervorrichtung mit flächig ausgedehnter Wärmeeintrageeinrichtung und flächig ausgedehnter Wärmeaustrageeinrichtung nach einem weiteren Ausführungsbeispiel der Erfindung;
- Fig. 3: in einer isometrischen Darstellung eine Wärmespeichervorrichtung mit flächig ausgedehnter Wärmeeintrageeinrichtung und flächig ausgedehnter Wärmeaustrageeinrichtung nach einem weiteren Ausführungsbeispiel der Erfindung;
- Fig. 4: in einer detaillierten Schnittdarstellung eine Wärmespeichervorrichtung nach einem Ausführungsbeispiel der Erfindung;
- Fig. 5: in einer isometrischen Darstellung eine Wärmespeichervorrichtung mit zylindrischer Wärmeeintrageeinrichtung und flächig ausgedehnter Wärmeaustrageeinrichtung nach einem weiteren Ausführungsbeispiel der Erfindung;
- Fig. 6: in einer Schnittdarstellung eine Wärmespeichervorrichtung mit zylindrischer Wärmeeintrageeinrichtung und flächig ausgedehnter Wärmeaustrageeinrichtung nach einem weiteren Ausführungsbeispiel der Erfindung;
- Fig. 7: in einer Schnittdarstellung eine Wärmespeichervorrichtung mit zylindrischer Wärmeeintrageeinrichtung und flächig ausgedehnter Wärmeaustrageeinrichtung nach einem weiteren Ausführungsbeispiel der Erfindung;
- Fig. 8: in einer isometrischen Darstellung eine Wärmespeichervorrichtung mit zylindrischer Wärmeeintrageeinrichtung und zylindrischer Wärmeaustrageeinrichtung nach einem weiteren Ausführungsbeispiel der Erfindung;
- Fig. 9: in einer Schnittdarstellung eine Wärmespeichervorrichtung mit zylindrischer Wärmeeintrageeinrichtung und zylindrischer Wärmeaustrageeinrichtung nach einem weiteren Ausführungsbeispiel der Erfindung;
- Fig. 10: in einer Schnittdarstellung eine Wärmespeichervorrichtung mit zylindrischer Wärmeeintrageeinrichtung und zylindrischer Wärmeaustrageeinrichtung nach einem weiteren Ausführungsbeispiel der Erfindung;
- Fig. 11: in einer isometrischen Darstellung eine Wärmespeichervorrichtung mit flächig ausgedehnter Wärmeeintrageeinrichtung und flächig ausgedehnter Wärmeaustrageeinrichtung nach einem weiteren Ausführungsbeispiel der Erfindung;
- Fig. 12: in einer Schnittdarstellung die Wärmespeichervorrichtung nach Figur 11;
- Fig. 13: in einer isometrischen Darstellung eine nicht umfasste Wärmespeichervorrichtung mit flächig ausgedehnter Wärmeaustrageeinrichtung in der Bodenplatte und flächig ausgedehnter Wärmeeintrageeinrichtung im Aufnahmeraum;
- Fig. 14: in einer Schnittdarstellung die nicht umfasste Wärmespeichervorrichtung nach Figur 13;
- Fig. 15: in einer isometrischen Darstellung eine nicht umfasste Wärmespeichervorrichtung mit flächig ausgedehnter Wärmeaustrageeinrichtung in der Bodenplatte und flächig ausgedehnter Wärmeeintrageeinrichtung im Aufnahmeraum;
- Fig. 16: in einer Schnittdarstellung die nicht umfasste Wärmespeichervorrichtung nach Figur 15;
- Fig. 17: in einer isometrischen Darstellung eine nicht umfasste Wärmespeichervorrichtung mit flächig ausgedehnter Wärmeaustrageeinrichtung in der Bodenplatte und zylindrischer Wärmeeintrageeinrichtung im Aufnahmeraum;
- Fig. 18: in einer Schnittdarstellung die nicht umfasste Wärmespeichervorrichtung nach Figur 17;
- Fig. 19: in einer isometrischen Darstellung eine nicht umfasste Wärmespeichervorrichtung mit zylindrischer Wärmeaustrageeinrichtung in der Bodenplatte und flächig ausgedehnter Wärmeeintrageeinrichtung im Aufnahmeraum;
- Fig. 20: in einer Schnittdarstellung die nicht umfasste Wärmespeichervorrichtung nach Figur 19;
- Fig. 21: in einer isometrischen Darstellung eine nicht umfasste Wärmespeichervorrichtung mit zylindrischer Wärmeaustrageeinrichtung in der Bodenplatte und flächig ausgedehnter Wärmeeintrageeinrichtung im Aufnahmeraum;
- Fig. 22: in einer Schnittdarstellung die nicht umfasste Wärmespeichervorrichtung nach Figur 21;
- Fig. 23: in einer isometrischen Darstellung eine nicht umfasste Wärmespeichervorrichtung mit zylindrischer Wärmeaustrageeinrichtung in der Bodenplatte und flächig ausgedehnter Wärmeeintrageeinrichtung im Aufnahmeraum;
- Fig. 24: in einer Schnittdarstellung die nicht umfasste Wärmespeichervorrichtung nach Figur 23;
- Fig. 25: in einer isometrischen Darstellung eine nicht umfasste Wärmespeichervorrichtung mit flächig ausgedehnter Wärmeeintrageeinrichtung in der Bodenplatte und zylindrischer Wärmeaustrageeinrichtung im Aufnahmeraum;
- Fig. 26: in einer Schnittdarstellung die nicht umfasste Wärmespeichervorrichtung nach Figur 25;
- Fig. 27: in einer isometrischen Darstellung eine nicht umfasste Wärmespeichervorrichtung mit flächig ausgedehnter Wärmeeintrageeinrichtung in der Bodenplatte und quaderförmiger Wärmeaustrageeinrichtung im Aufnahmeraum;
- Fig. 28: in einer Schnittdarstellung die nicht umfasste Wärmespeichervorrichtung nach Figur 27;
- Fig. 29: in einer isometrischen Darstellung eine nicht umfasste Wärmespeichervorrichtung mit flächig ausgedehnter Wärmeeintrageeinrichtung in der Bodenplatte und zylindrischer Wärmeaustrageeinrichtung im Aufnahmeraum;
- Fig. 30: in einer Schnittdarstellung die nicht umfasste Wärmespeichervorrichtung nach Figur 29;
- Fig. 31: in einer isometrischen Darstellung eine nicht umfasste Wärmespeichervorrichtung mit flächig ausgedehnter Wärmeeintrageeinrichtung in der Bodenplatte und quaderförmiger Wärmeaustrageeinrichtung im Aufnahmeraum;
- Fig. 32: in einer Schnittdarstellung die nicht umfasste Wärmespeichervorrichtung nach Figur 31;
- Fig. 33: in einer isometrischen Darstellung eine Wärmespeichervorrichtung mit zylindrischer Wärmeeintrageeinrichtung und zylindrischer Wärmeaustrageeinrichtung in einem Gehäuse im Aufnahmeraum nach einem weiteren Ausführungsbeispiel der Erfindung;
- Fig. 34: in einer Draufsicht eine Wärmespeichervorrichtung mit linear angeordneter Wärmeeintrageeinrichtung und Wärmeaustrageeinrichtung in einem Gehäuse nach einem weiteren Ausführungsbeispiel der Erfindung;
- Fig. 35: in einer Draufsicht eine Wärmespeichervorrichtung mit kreuzförmig angeordneter Wärmeeintrageeinrichtung und Wärmeaustrageeinrichtung in einem Gehäuse nach einem weiteren Ausführungsbeispiel der Erfindung;
- Fig. 36: in einer Draufsicht eine Wärmespeichervorrichtung mit koaxial angeordneter Wärmeeintrageeinrichtung und Wärmeaustrageeinrichtung in einem Gehäuse nach einem weiteren Ausführungsbeispiel der Erfindung;
- Fig. 37: in einer Draufsicht eine Wärmespeichervorrichtung mit linear angeordneter Wärmeeintrageeinrichtung und Wärmeaustrageeinrichtung in einem Gehäuse nach einem weiteren Ausführungsbeispiel der Erfindung;
- Fig. 38: in einer Draufsicht eine Wärmespeichervorrichtung mit linear angeordneter Wärmeeintrageeinrichtung und Wärmeaustrageeinrichtung in einem Gehäuse nach einem weiteren Ausführungsbeispiel der Erfindung;
- Fig. 39: in einer Draufsicht eine Wärmespeichervorrichtung mit linear angeordneter Wärmeeintrageeinrichtung und Wärmeaustrageeinrichtung in einem Gehäuse nach einem weiteren Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

Das in den verschiedenen Ausführungsbeispielen, die in den Figuren beschrieben sind, als Speichermaterial 10 verwendete Phasenwechselmaterial weist eine Phasenwechseltemperatur von wenigstens 100°C auf, vorzugsweise von wenigstens 500°C. Das Speichermaterial 10 kann beispielsweise eine Aluminium-Silizium-Legierung sein, insbesondere AlSi₁₂. Dieses Material hat eine Phasenwechseltemperatur von etwa 577 °C, bei der das Material bei konstanter Temperatur schmilzt, wenn Energie zugeführt wird, bzw. erstarrt, wenn Energie entzogen wird.

Die Einhausung 16 kann in einem Ausführungsbeispiel aus einem insbesondere faserverstärkten Keramikmaterial gebildet sein, beispielsweise Siliziumkarbid, oder auch Aluminiumoxid oder Graphit. Denkbar sind jedoch auch andere geeignete Materialien. Die Wandstärke kann sehr dünn sein, beispielsweise 1 mm, insbesondere mindestens 2 mm und mindestens insbesondere 2,5 mm betragen und beispielsweise bei ca. 3 mm liegen. Vorzugsweise liegt die Wandstärke bei höchstens 5 mm.

Vorzugsweise ist der thermische Ausdehnungskoeffizient des metallischen Phasenwechselmaterials 10 größer als der des Materials der Einhausung 16.

Grundsätzlich können die Wärmeeintrageeinrichtung 30 und die Wärmeaustrageeinrichtung 40 jeweils eine oder mehrere Komponenten zum Wärmeeintrag bzw. zum Wärmeaustrag aufweisen.

Ein aus dem Wärmeeintrag oder Wärmeaustrag resultierende Phasenwechsel des Speichermaterials 10 geht von wenigstens einem korrespondierenden Kontaktbereich 11 des Speichermaterials 10 aus. Der Kontaktbereich 11 ist mit dem Kopplungsbereich 32 der wenigstens einen Wärmeeintrageeinrichtung 30 und/oder dem Kopplungsbereich 42 der wenigstens einen Wärmeaustrageeinrichtung 40 in Kontakt. Je nach Anordnung der Kopplungsbereiche 32 42 können die Kontaktbereiche 11 bzw. der wenigstens eine Kontaktbereich 11 an einem Boden der Aufnahmekammer 12 angrenzen. Insbesondere sind die Kontaktbereiche 11 des Speichermaterials 10 nicht in einem Bereich des Speichermaterials 10 angeordnet, welcher bestimmungsgemäß bei einem durch den Wärmeaustrag resultierenden Phasenwechsel zuletzt erstarrt ist. Dadurch kann der Kontaktbereich 11 frei von Materialdefekten sein.

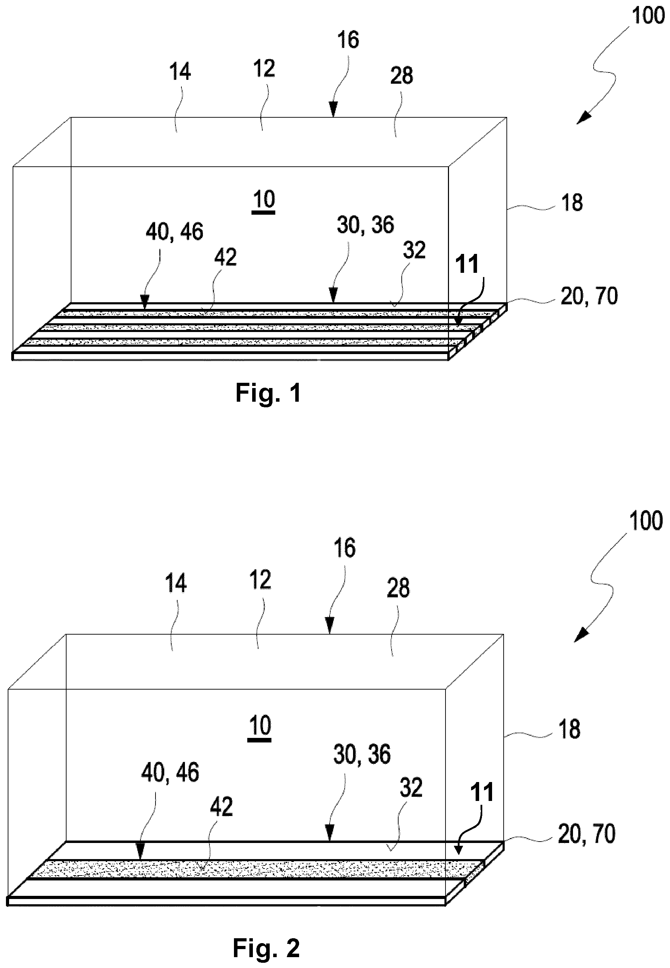

In den Figuren 1 bis 3 sind in einer isometrischen Darstellung jeweils eine Wärmespeichervorrichtung 100 mit einer flächig ausgedehnten Wärmeeintrageeinrichtung 30 und einer flächig ausgedehnten Wärmeaustrageeinrichtung 40 nach verschiedenen Ausführungsbeispielen der Erfindung dargestellt.

Die Wärmespeichervorrichtung 100 mit einem metallischen Phasenwechselmaterial als Speichermaterial 10 umfasst eine Aufnahmekammer 12 mit einem Aufnahmeraum 14 für das Speichermaterial 10 und eine Einhausung 16 für den Aufnahmeraum 14. Das Speichermaterial 50 umfasst eine metallische Legierung beispielsweise mit einem oder mehreren der Bestandteile Aluminium, Silizium, Kupfer, Magnesium, Zink, Germanium, insbesondere eine AISi-Legierung, bevorzugt AlSi12.

Weiter umfasst die Wärmespeichervorrichtung 100 eine Wärmeeintrageeinrichtung 30 zum Eintragen von Wärme in die wenigstens eine Aufnahmekammer 12, und eine Wärmeaustrageeinrichtung 40 zum Austragen von Wärme aus der einen Aufnahmekammer 12. Ein zur thermischen Kopplung mit dem Speichermaterial 10 vorgesehener Kopplungsbereich 32 der Wärmeeintrageeinrichtung 30 und ein zur thermischen Kopplung mit dem Speichermaterial 10 vorgesehener Kopplungsbereich 42 der Wärmeaustrageeinrichtung 40 sind zum Speichermaterial 10 zumindest bereichsweise beabstandet angeordnet.

Die Wärmeeintrageeinrichtung 30 weist wenigstens eine Heizeinrichtung 34 auf. Insbesondere kann die Heizeinrichtung 34 eine Widerstandsheizung oder induktive Heizung aufweisen oder damit gekoppelt sein.

Die Wärmeaustrageeinrichtung 40 kann beispielsweise von einem Wärmeübertragungsmedium durchströmt werden. Insbesondere kann die Wärmeaustrageeinrichtung 40 wenigstens ein Rohr 52 umfassen oder damit verbunden sein, welches von einem Wärmeübertragungsmedium 58 durchströmt ist. Der Querschnitt des Rohres 52 kann beispielsweise rund, eckig, quadratisch sein. Das Rohr 52 kann auch als hohles Flachelement ausgebildet sein.

Die Kopplungsbereiche 32, 42 der Wärmeeintrageeinrichtung 30 und der Wärmeaustrageeinrichtung 40 sind wenigstens bereichsweise außerhalb des Aufnahmeraums 14 angeordnet, insbesondere wenigstens bereichsweise außerhalb der Aufnahmekammer 12 angeordnet. Dies ist dadurch realisiert, dass der Kopplungsbereich 32, 42 von Wärmeeintrageeinrichtung 30 und Wärmeaustrageeinrichtung 40 über mindestens ein Wärmebrückenelement 70 thermisch mit dem Speichermaterial 10 gekoppelt sind. Dadurch ist der Kopplungsbereich 32, 42 indirekt mit dem Speichermaterial 10 verbunden, und nicht in direktem Materialkontakt, sondern nur mittelbar in thermischem Kontakt mit dem metallischen Phasenwechselmaterial. In diesen Ausführungsbeispielen weist die Einhausung 16 das mindestens eine Wärmebrückenelement 70 auf. Das Wärmebrückenelement 70 kann zweckmäßig an einem Außenmantel 18 der Einhausung 16 angeordnet sein. Bei den in den Figuren 1 bis 3 gezeigten Ausführungsbeispielen ist das Wärmebrückenelement 70 insbesondere in die Bodenplatte 20 integriert, bzw. wird durch die Bodenplatte 20 realisiert. Die Wärmeeintrageeinrichtung 30 und die Wärmeaustrageeinrichtung 40 selbst sind mindestens bereichsweise außerhalb des Speichermaterials 10 angeordnet.

In Figur 1 sind die einzelnen Elemente 36 der Wärmeeintrageeinrichtung 30 und die einzelnen Elemente 46 der Wärmeaustrageeinrichtung 40 mit ihren Längsseiten streifenförmig nebeneinander angeordnet und weisen mit ihren Kopplungsbereichen 32, 42 zum Speichermaterial 10 in der Aufnahmekammer 12 hin.

In Figur 2 sind an den beiden Längsseiten eines einzigen Elements 46 der Wärmeaustrageeinrichtung 40 zwei streifenförmige Elemente 36 der Wärmeeintrageeinrichtung 30 angeordnet.

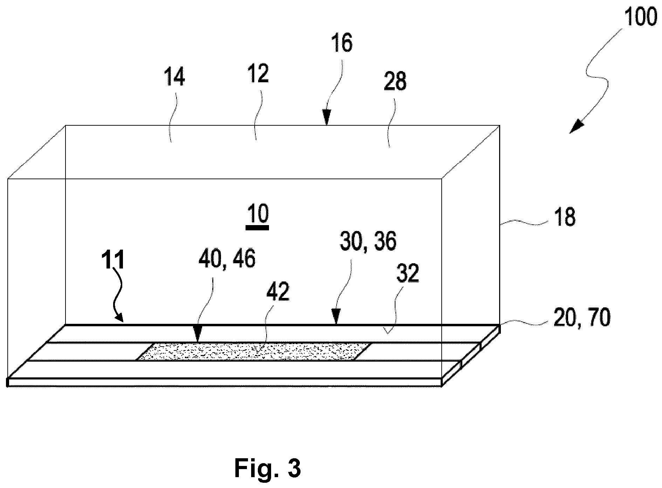

In Figur 3 ist ein Element 46 einer Wärmeaustrageeinrichtung 40 von Elementen 36, der Wärmeeintrageeinrichtung 30 umrandet.

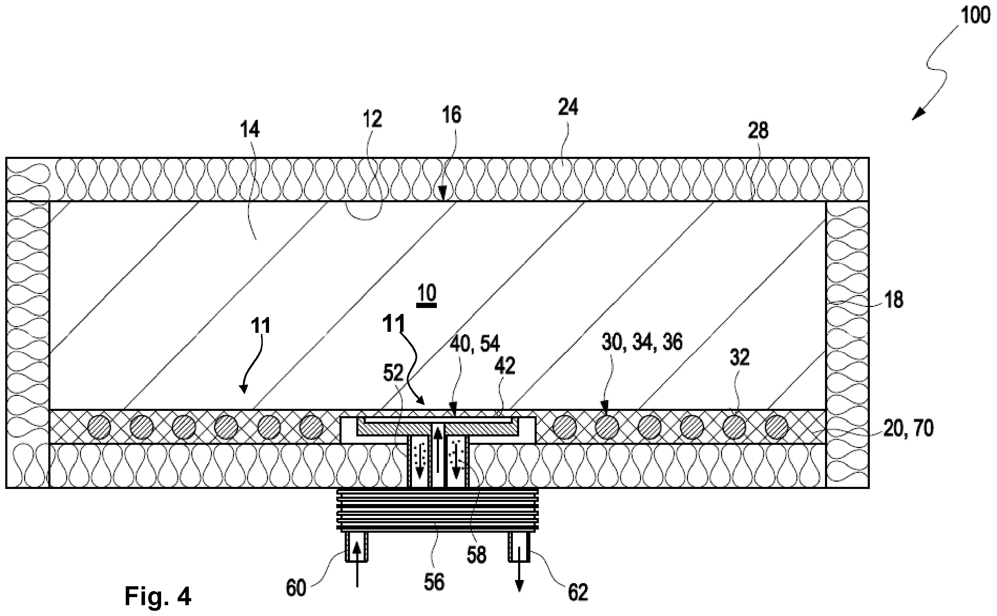

Figur 4 zeigt in einer detaillierten Schnittdarstellung eine Wärmespeichervorrichtung 100 nach einem Ausführungsbeispiel der Erfindung mit einer zylindrisch ausgebildeten Wärmeeintrageeinrichtung 30 und einer flächig ausgedehnt ausgebildeten Wärmeaustrageeinrichtung 40. Beide Komponenten 30, 40 sind in der Bodenplatte 20 angeordnet, welche als Wärmebrückenelement 70 zum Speichermaterial 10 wirkt.

Die Kopplungsbereiche 32, 42 von Wärmeeintrageeinrichtung 30 und Wärmeaustrageeinrichtung 40 weisen zum Speichermaterial 10 bzw. zur Aufnahmekammer 12 hin, sind davon jedoch durch das Material der Bodenplatte 20 beabstandet.

Das Speichermaterial 10 ist im Aufnahmeraum 14 der Aufnahmekammer 12 angeordnet. Die Aufnahmekammer 12 ist von einer Einhausung 16 umgeben. An einer Außenseite weist die Einhausung 16 eine Wärmedämmung 24 auf, um die Temperatur des Speichermaterials 10 möglichst lange konstant halten zu können.

Die Wärmeeintrageeinrichtung 30, welche in der Bodenplatte 20 der Aufnahmekammer 12 integriert ist, weist einzelne zylindrische Elemente 36 auf, welche parallel nebeneinander angeordnet in Aufnahmebohrungen der Bodenplatte 20 eingebracht sind. Die Elemente 36 können so als Heizelemente 34 ausgebildet sein. Beispielsweise können die Heizelemente 34 elektrische Heizpatronen aufweisen oder als solche ausgebildet sein. Alternativ können die Elemente 36 jedoch auch mit Heizelementen thermisch gekoppelt sein.

Die Wärmeaustrageeinrichtung 40 ist als Verdampfereinrichtung 54 ausgebildet, in welcher das Wärmeübertragungsmedium 58 verdampft wird und als Dampf durch das Rohr 52 zu dem Kondensator 56 geleitet wird. Der Kondensator 56 weist Kühlmittelanschlüsse 60, 62 für ein Kühlmedium auf, mittels welchen der Dampf wieder kondensiert werden kann, um dann als flüssiges Wärmeübertragungsmedium 58 wieder zum Verdampfer geleitet zu werden.

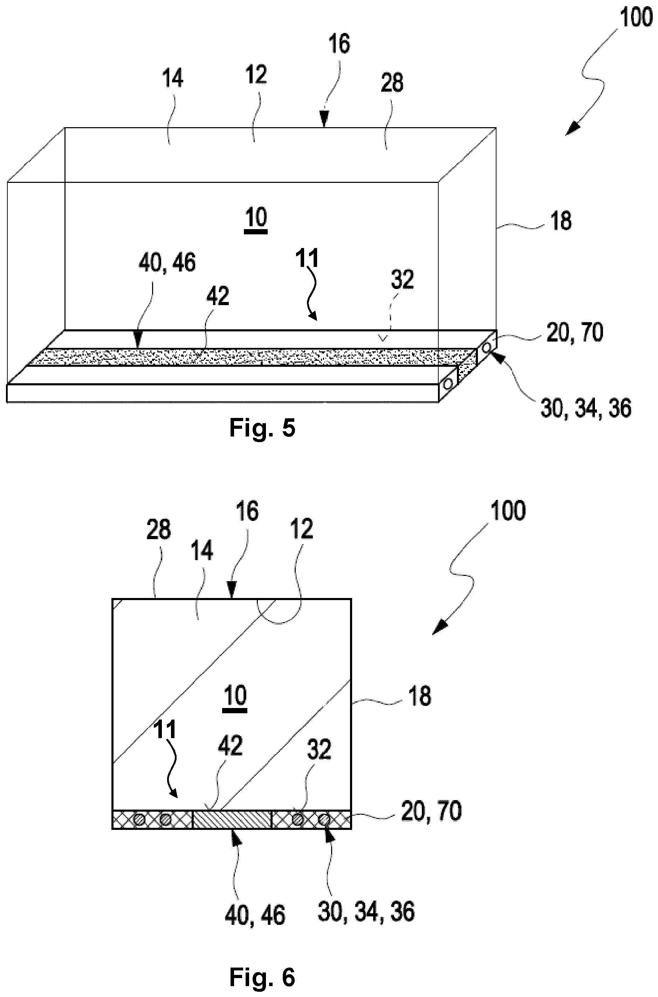

In den Figuren 5 bis 7 sind jeweils verschiedene Ausführungsformen einer Wärmespeichervorrichtung 100 mit zylindrischer Wärmeeintrageeinrichtung 30 und flächig ausgedehnter Wärmeaustrageeinrichtung 40 dargestellt. Die Wärmeeintrageeinrichtung 30 und die Wärmeaustrageeinrichtung 40 sind jeweils in die Bodenplatte 20 integriert, welche als Wärmebrückenelement 70 zur Übertragung der Wärme von und zu dem Speichermaterial 10 in der Aufnahmekammer 12 wirkt.

Bei dem Ausführungsbeispiel in Figur 5, welches in einer isometrischen Darstellung eine Wärmespeichervorrichtung 100 mit zylindrischer Wärmeeintrageeinrichtung 30 und flächig ausgedehnter Wärmeaustrageeinrichtung 40 zeigt, ist die Wärmeaustrageeinrichtung 40 als einzelnes Element 46 in der Bodenplatte 20 angeordnet. Zu beiden Längsseiten des Elements 46 sind beabstandet in der Bodenplatte 20 zwei zylindrisch ausgebildete Elemente 36 der Wärmeeintrageeinrichtung 30 angeordnet, welche beispielsweise als Heizeinrichtungen 34, beispielsweise wie zuvor in Form von Heizpatronen, ausgebildet sein können.

Bei dem Ausführungsbeispiel in Figur 6, welches in einer Schnittdarstellung eine Wärmespeichervorrichtung 100 mit zylindrischer Wärmeeintrageeinrichtung 30 und flächig ausgedehnter Wärmeaustrageeinrichtung 40 zeigt, weist die Wärmeeintrageeinrichtung 30 zu beiden Seiten der Wärmeaustrageeinrichtung 40 jeweils zwei zylindrisch ausgebildete Elemente 36 der Wärmeeintrageeinrichtung 30 auf.

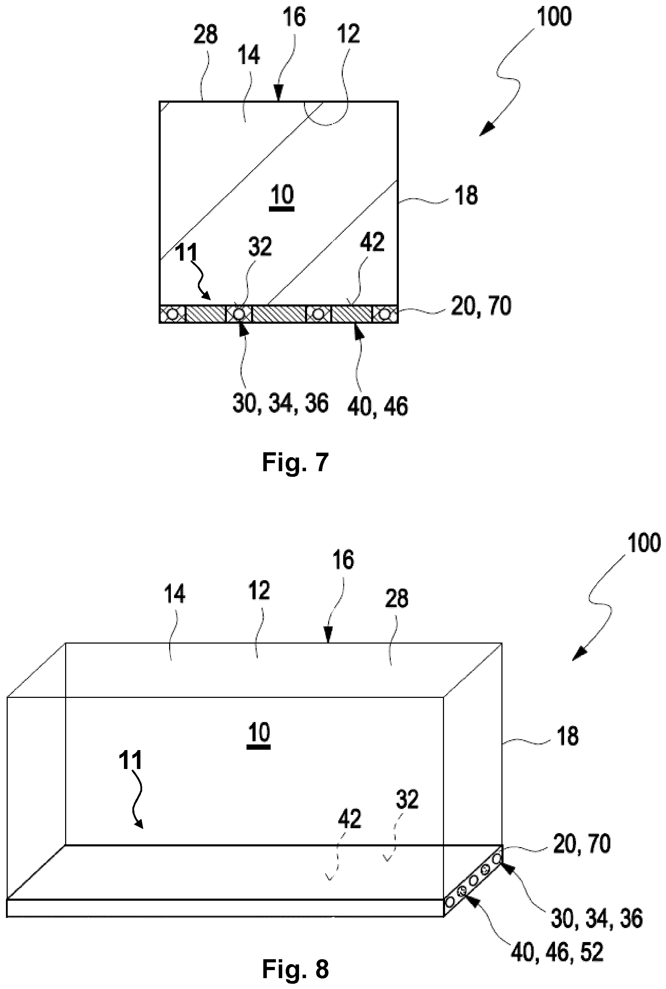

Bei dem Ausführungsbeispiel in Figur 7, welches ebenfalls in einer Schnittdarstellung eine Wärmespeichervorrichtung 100 mit zylindrischer Wärmeeintrageeinrichtung 30 und flächig ausgedehnter Wärmeaustrageeinrichtung 40 zeigt, ist die Wärmeaustrageeinrichtung 40 mit drei Elementen 46 in der Bodenplatte 20 angeordnet. Zwischen den flächig ausgebildeten Elementen 46 der Wärmeaustrageeinrichtung 40 und an deren Außenseite ist jeweils ein zylindrisch ausgebildetes Element 36 der Wärmeeintrageeinrichtung 30 angeordnet.

Die zylindrisch ausgebildeten Elemente 36 der Wärmeeintrageeinrichtung 30 können in Bohrungen der Bodenplatte 20 eingebracht sein.

In den Figuren 8 bis 10 sind jeweils verschiedene Ausführungsformen einer Wärmespeichervorrichtung 100 mit zylindrischer Wärmeeintrageeinrichtung 30 und zylindrischer Wärmeaustrageeinrichtung 40 dargestellt. Wärmeeintrageeinrichtung 30 und Wärmeaustrageeinrichtung 40 sind jeweils in die Bodenplatte 20 integriert, welche als Wärmebrückenelement 70 zur Übertragung der Wärme von und zu dem Speichermaterial 10 in der Aufnahmekammer 12 wirkt.

Bei dem Ausführungsbeispiel in Figur 8, welches in einer isometrischen Darstellung eine Wärmespeichervorrichtung 100 mit zylindrischer Wärmeeintrageeinrichtung 30 und zylindrischer Wärmeaustrageeinrichtung 40 zeigt, ist die Wärmeeintrageeinrichtung 30 mit drei zylindrisch ausgebildeten Elementen 36 in der Bodenplatte 20 angeordnet, welche beispielsweise als Heizeinrichtungen 34 ausgebildet sein können. Zwischen den Elementen 36 ist beabstandet in der Bodenplatte 20 jeweils ein zylindrisch ausgebildetes Element 46 der Wärmeaustrageeinrichtung 40 angeordnet.

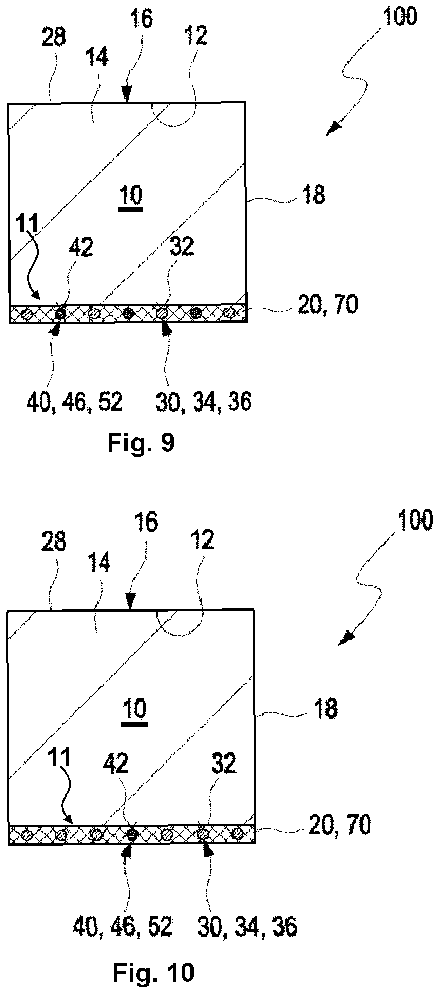

Bei dem Ausführungsbeispiel in Figur 9, welches in einer Schnittdarstellung eine Wärmespeichervorrichtung 100 mit zylindrischer Wärmeeintrageeinrichtung 30 und zylindrischer Wärmeaustrageeinrichtung 40 zeigt, weist die Wärmeeintrageeinrichtung 30 vier zylindrisch ausgebildete Elemente 36 auf, zwischen denen jeweils ein zylindrisch ausgebildetes Element 46 der Wärmeaustrageeinrichtung 40 angeordnet ist.

Bei dem Ausführungsbeispiel in Figur 10, welches ebenfalls in einer Schnittdarstellung eine Wärmespeichervorrichtung 100 mit zylindrischer Wärmeeintrageeinrichtung 30 und zylindrischer Wärmeaustrageeinrichtung 40 zeigt, ist die Wärmeaustrageeinrichtung 40 als ein zylindrisches Element 46 in der Bodenplatte 20 angeordnet. Zu beiden Seiten der Wärmeaustrageeinrichtung 40 sind jeweils drei zylindrisch ausgebildete Elemente 36 der Wärmeeintrageeinrichtung 30 angeordnet.

Die zylindrisch ausgebildeten Elemente 36 der Wärmeeintrageeinrichtung 30 sowie die zylindrisch ausgebildeten Elemente 46 der Wärmeaustrageeinrichtung 40 können in Bohrungen der Bodenplatte 20 eingebracht sein.

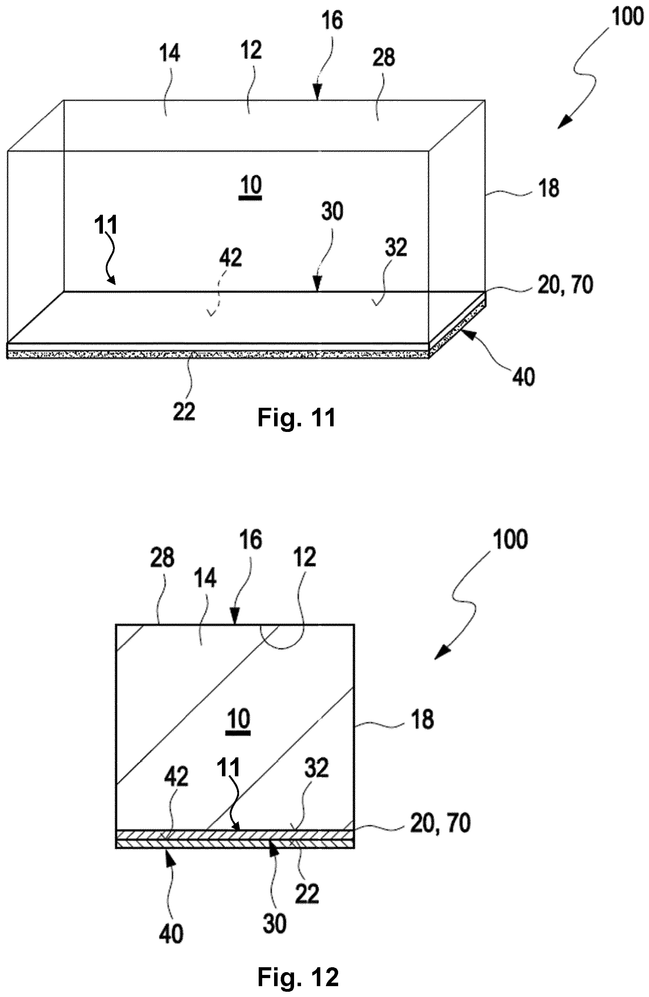

Figur 11 zeigt in einer isometrischen Darstellung eine Wärmespeichervorrichtung 100 mit flächig ausgedehnter Wärmeeintrageeinrichtung 30 und flächig ausgedehnter Wärmeaustrageeinrichtung 40 nach einem weiteren Ausführungsbeispiel der Erfindung. In Figur 12 ist die Wärmespeichervorrichtung 100 in einer Schnittdarstellung dargestellt.

Bei diesem Ausführungsbeispiel ist der Kopplungsbereich 42 der Wärmeaustrageeinrichtung 40 an einer von der Einhausung 16 abgewandten Seite 22 des Kopplungsbereichs 32 der Wärmeeintrageeinrichtung 30 angeordnet. Die Wärmeeintrageeinrichtung 30 ist direkt an der Bodenplatte 20 beabstandet zu dem Speichermaterial 10 angeordnet, während die Wärmeaustrageeinrichtung 40 auf die von der Aufnahmekammer 12 abgewandten Außenseite der Wärmeeintrageeinrichtung 30 aufgebracht ist.

Alternativ könnte auch der Kopplungsbereich 32 der Wärmeeintrageeinrichtung 30 an einer von der Einhausung 16 abgewandten Seite 22 des Kopplungsbereichs 42 der Wärmeaustrageeinrichtung 40 angeordnet sein, sodass Wärmeeintrageeinrichtung 30 und Wärmeaustrageeinrichtung 40 vertauscht wären.

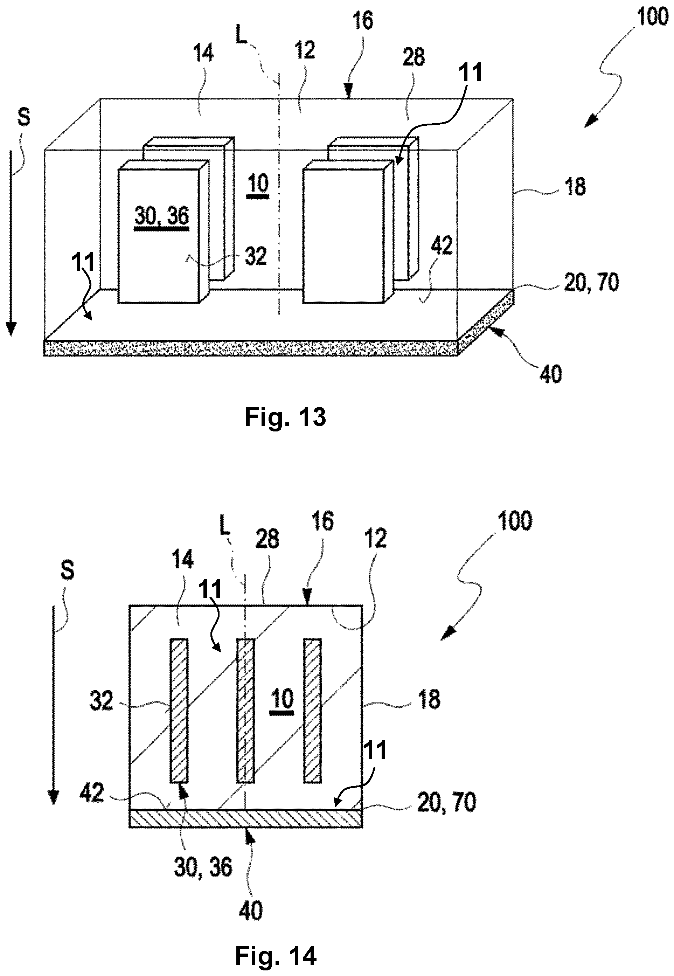

In den Figuren 13 bis 24 ist eine nicht umfasste Ausführungsform der Wärmespeichereinrichtung 100 dargestellt, bei der die Wärmeeintrageeinrichtung 30 jeweils in der Aufnahmekammer 12 angeordnet ist, während die Wärmeaustrageeinrichtung 40 an der Bodenplatte 20 der Einhausung 16, und teilweise in der Bodenplatte 20 der Einhausung 16 integriert ist. Durch die Anbringung der Wärmeaustrageeinrichtung 40 an der Bodenplatte 20 erfolgt der Erstarrungsprozess bei der Abkühlung ausgehend von der Bodenplatte 20 der Einhausung 16. Außerdem begünstigt die Schwerkraft ebenfalls eine Erstarrung zur Bodenplatte 20 hin. Die Wärmeeintrageeinrichtung 30 kann günstigerweise innerhalb des Speichermaterials 10 weitgehend senkrecht zur Wärmeaustrageeinrichtung 40 angebracht werden. Hierdurch kann die Bildung von Materialdefekten auf der von der Wärmeaustrageeinrichtung 40 abgewandten Seite der Wärmeeintrageeinrichtung 30 vermieden werden.

Bei den in den Figuren 13 bis 24 dargestellten Ausführungsbeispielen kann die Wärmeeintrageeinrichtung 30 wenigstens ein Element 36 mit dem Kopplungsbereich 32 aufweisen, bei dem der Kopplungsbereich 32 im Wesentlichen eine gesamte Länge des Elements 36 in dem Aufnahmeraum 14 und/oder einen gesamten Umfang des Elements 36 und/oder einen gesamten Umfang des Elements 36 in dem Aufnahmeraum 14 umfasst.

Der Kopplungsbereich 32 kann sich dabei über mindestens 50%, insbesondere über mindestens 60% einer gesamten Höhe des Aufnahmeraums 14 erstrecken.

Ein Element 36 oder der Kopplungsbereich 32 des Elements 36 kann beabstandet zu der Einhausung 16 sein und insbesondere kann ein Ende des Elements 36 beabstandet zu einem Deckel 28 und/oder dem Boden der Einhausung 16 sein. Alternativ kann das Element 36 jedoch auch direkt auf der Bodenplatte 20 der Einhausung aufgesetzt angeordnet sein.

Ein Element 36 oder der Kopplungsbereich 32 des Elements 36 kann parallel zu einem Element 46 der Wärmeaustrageeinrichtung 40 ausgerichtet sein.

Ein Element 36 oder der Kopplungsbereich 32 des Elements 36 kann parallel zu einer Höhenachse L oder Symmetrieachse des Aufnahmeraums 14 ausgerichtet sein.

Ein Element 36 oder der Kopplungsbereich 32 des Elements 36 kann zentral in dem Aufnahmeraum 14 angeordnet sein und insbesondere an einer Symmetrieachse des Aufnahmeraums 14 liegen.

Ein Element 36 kann schräg, insbesondere senkrecht, zu einer Ausrichtung der Wärmeaustrageeinrichtung 40, und/oder im bestimmungsgemäßen Arbeitszustand parallel zu einer Schwererichtung S angeordnet sein. Weiter kann das Element 36 parallel zu einer Ausrichtung der wenigstens einen Wärmeaustrageeinrichtung 40 angeordnet sein.

Figur 13 zeigt in einer isometrischen Darstellung eine nicht umfasste Wärmespeichervorrichtung 100 mit flächig ausgedehnter Wärmeaustrageeinrichtung 40 in der Bodenplatte 20 und flächig ausgedehnter Wärmeeintrageeinrichtung 30 im Aufnahmeraum 14. In Figur 14 ist eine solche nicht umfasste Wärmespeichervorrichtung 100 in einer Schnittdarstellung dargestellt. Die Schnittdarstellung umfasst dabei mehr Elemente 36 als die isometrische Darstellung.

Die Wärmeaustrageeinrichtung 40 umfasst ein einzelnes Element, welche in der Bodenplatte 20 der Einhausung 16 integriert ist, während die Wärmeeintrageeinrichtung 30 mehrere Elemente 36 umfasst, welche in der Schwererichtung S senkrecht stehend zu der Bodenplatte 20 und damit senkrecht zur Entladerichtung in das Speichermaterial 10 eingebracht sind.

Dadurch ist der Kopplungsbereich 32 der Wärmeeintrageeinrichtung 30 wenigstens bereichsweise innerhalb des Aufnahmeraums 14 angeordnet, insbesondere wenigstens bereichsweise innerhalb der Aufnahmekammer 12 angeordnet.

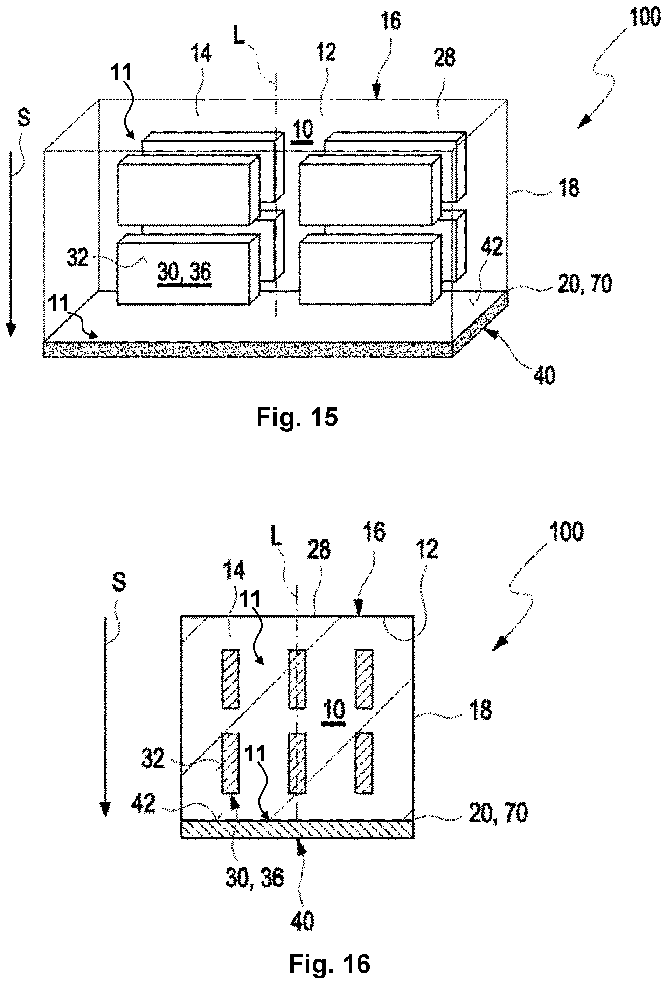

Figur 15 zeigt in einer isometrischen Darstellung eine nicht umfasste Wärmespeichervorrichtung 100 mit flächig ausgedehnter Wärmeaustrageeinrichtung 40 in der Bodenplatte 20 und flächig ausgedehnter Wärmeeintrageeinrichtung 30 im Aufnahmeraum 14. In Figur 16 ist eine solche nicht umfasste Wärmespeichervorrichtung in einer Schnittdarstellung dargestellt. Die Schnittdarstellung umfasst dabei mehr Elemente 36 als die isometrische Darstellung.

Die Anordnung der Wärmeaustrageeinrichtung 40 ist gleich wie bei dem Ausführungsbeispiel in den Figuren 13 und 14. Die Anordnung der einzelnen Elemente 36 der Wärmeeintrageeinrichtung 30 ist jedoch liegend, also parallel zur Bodenplatte 20 in der Aufnahmekammer 12 und damit senkrecht zur Entladerichtung des Speichermaterials 10.

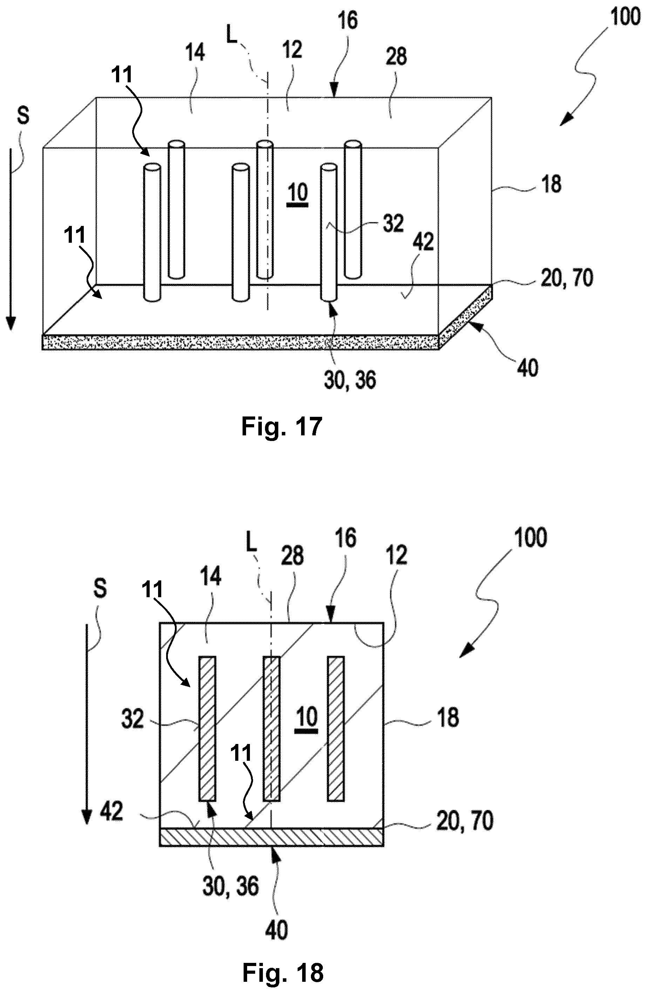

Figur 17 zeigt in einer isometrischen Darstellung eine nicht umfasste Wärmespeichervorrichtung 100 mit flächig ausgedehnter Wärmeaustrageeinrichtung 40 in der Bodenplatte 20 und zylindrischer Wärmeeintrageeinrichtung 30 im Aufnahmeraum 14. In Figur 18 ist eine solche nicht umfasste Wärmespeichervorrichtung 100 in einer Schnittdarstellung dargestellt. Die Schnittdarstellung umfasst dabei mehr Elemente 36 als die isometrische Darstellung.

Die Anordnung der Wärmeaustrageeinrichtung 40 ist gleich wie bei dem Ausführungsbeispiel in den Figuren 13 und 14. Die Wärmeeintrageeinrichtung 30 umfasst mehrere Elemente 36, welche zylindrisch ausgebildet sind und in der Schwererichtung S senkrecht stehend zu der Bodenplatte 20 und damit senkrecht zur Entladerichtung in das Speichermaterial 10 eingebracht sind.

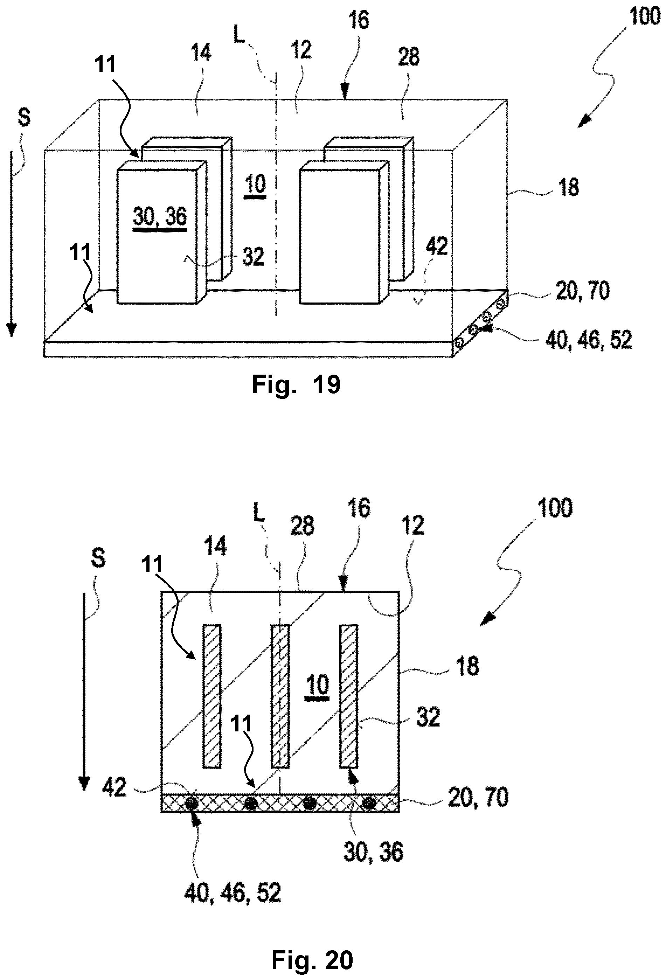

Figur 19 zeigt in einer isometrischen Darstellung eine nicht umfasste Wärmespeichervorrichtung 100 mit zylindrischer Wärmeaustrageeinrichtung 40 in der Bodenplatte 20 und flächig ausgedehnter Wärmeeintrageeinrichtung 30 im Aufnahmeraum 14. In Figur 20 ist eine solche Wärmespeichervorrichtung 100 in einer Schnittdarstellung dargestellt. Die Schnittdarstellung umfasst dabei mehr Elemente 36 als die isometrische Darstellung.

Die einzelnen Elemente 46 der Wärmeaustrageeinrichtung 40 sind zylindrisch ausgebildet und in Bohrungen der Bodenplatte 20 liegend eingebracht. Die Wärmeeintrageeinrichtung 30 umfasst mehrere Elemente 36, welche in der Schwererichtung S senkrecht stehend zu der Bodenplatte 20 und damit senkrecht zur Entladerichtung in das Speichermaterial 10 eingebracht sind.

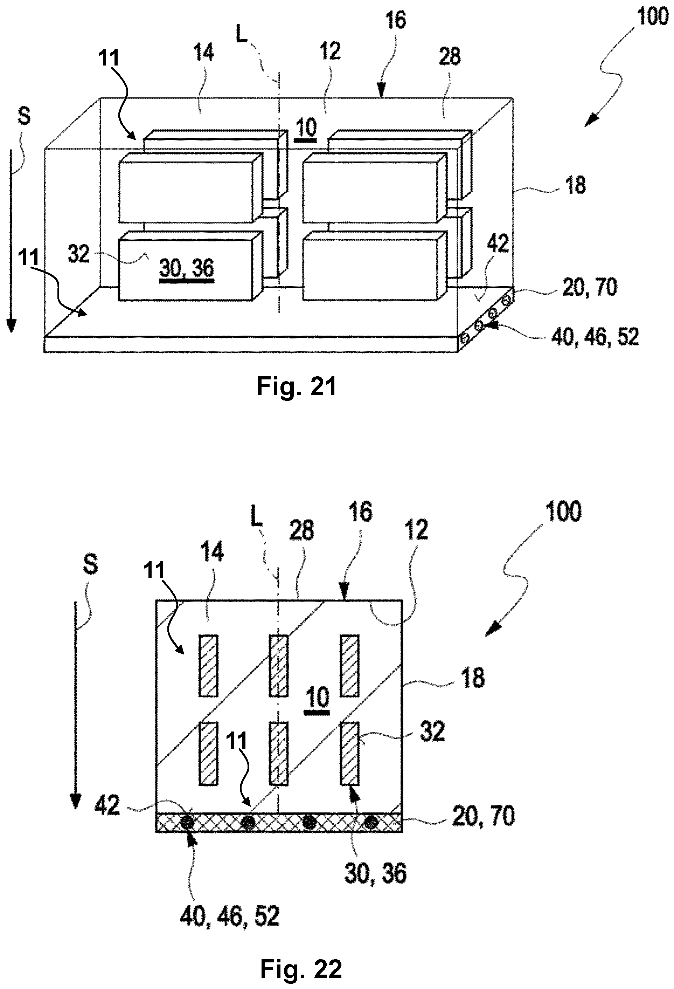

Figur 21 zeigt in einer isometrischen Darstellung eine nicht umfasste Wärmespeichervorrichtung 100 mit zylindrischer Wärmeaustrageeinrichtung 40 in der Bodenplatte 20 und flächig ausgedehnter Wärmeeintrageeinrichtung 30 im Aufnahmeraum 14. In Figur 22 ist eine solche Wärmespeichervorrichtung 100 in einer Schnittdarstellung dargestellt. Die Schnittdarstellung umfasst dabei mehr Elemente 36 als die isometrische Darstellung.

Die Anordnung der Wärmeaustrageeinrichtung 40 ist gleich wie bei dem Ausführungsbeispiel in den Figuren 19 und 20. Die Anordnung der einzelnen Elemente 36 der Wärmeeintrageeinrichtung 30 ist jedoch liegend, also parallel zur Bodenplatte 20 in der Aufnahmekammer 12 und damit senkrecht zur Entladerichtung des Speichermaterials 10.

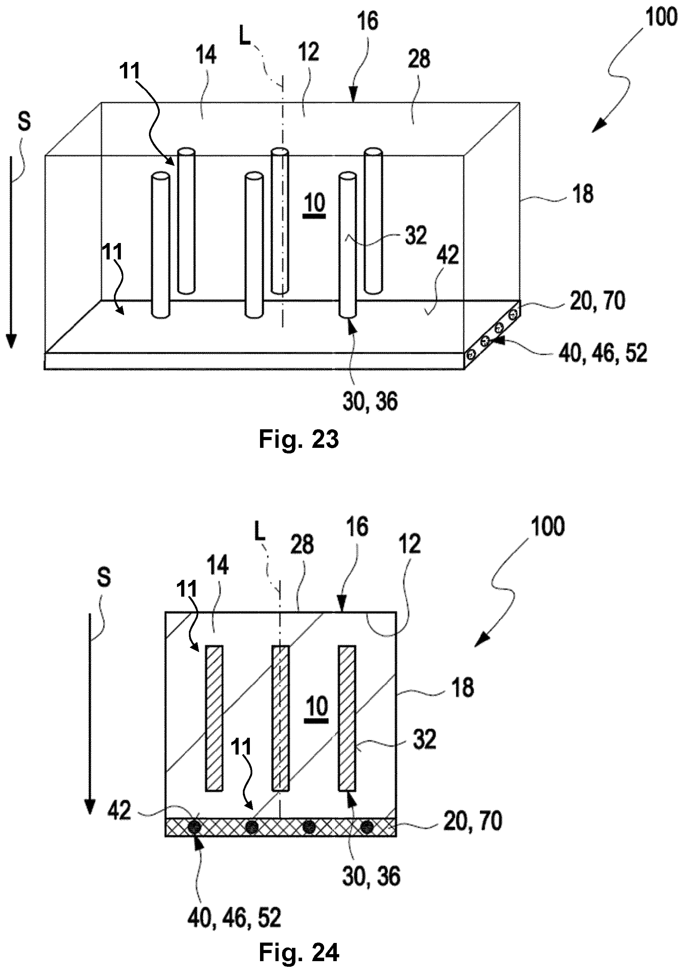

Figur 23 zeigt in einer isometrischen Darstellung eine nicht umfasste Wärmespeichervorrichtung 100 mit zylindrischer Wärmeaustrageeinrichtung 40 in der Bodenplatte 20 und flächig ausgedehnter Wärmeeintrageeinrichtung 30 im Aufnahmeraum 14. In Figur 24 ist eine solche Wärmespeichervorrichtung 100 in einer Schnittdarstellung dargestellt. Die Schnittdarstellung umfasst dabei mehr Elemente 36 als die isometrische Darstellung.

Die Anordnung der Wärmeaustrageeinrichtung 40 ist gleich wie bei dem Ausführungsbeispiel in den Figuren 19 und 20. Die Wärmeeintrageeinrichtung 30 umfasst mehrere Elemente 36, welche zylindrisch ausgebildet sind und in der Schwererichtung S senkrecht stehend zu der Bodenplatte 20 und damit senkrecht zur Entladerichtung in das Speichermaterial 10 eingebracht sind.

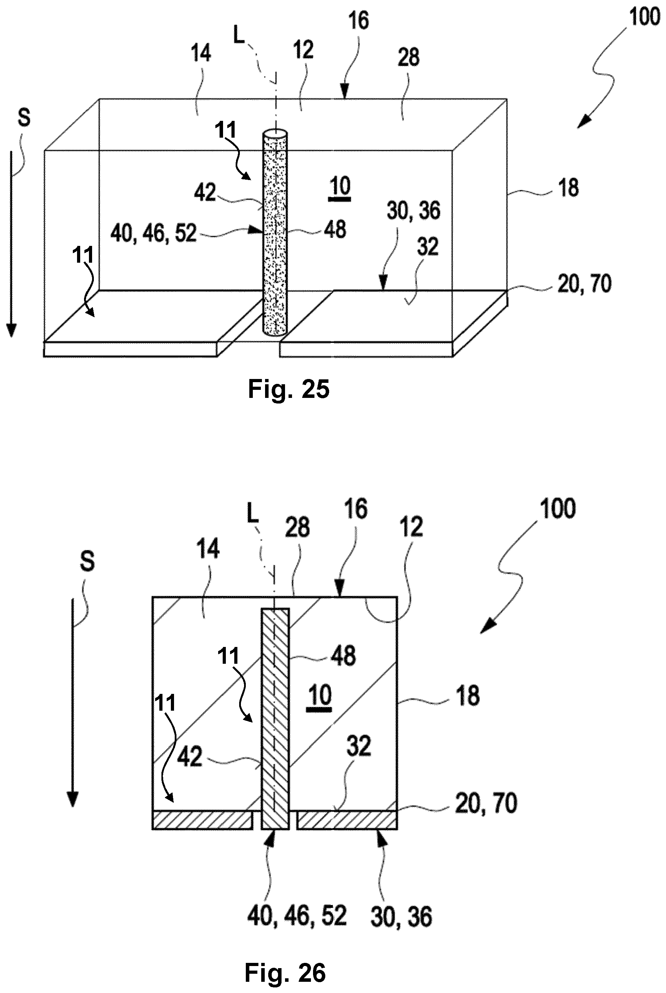

In den Figuren 25 bis 32 ist eine nicht umfasste Ausführungsform der Wärmespeichereinrichtung 100 dargestellt, bei der die Wärmeaustrageeinrichtung 40 jeweils in der Aufnahmekammer 12 angeordnet ist, während die Wärmeeintrageeinrichtung 30 an der Bodenplatte 20 der Einhausung 16, und teilweise in der Bodenplatte 20 der Einhausung 16 integriert ist.

Durch die Anbringung der Wärmeaustrageeinrichtung 40 im Speichermaterial 10 erfolgt der Erstarrungsprozess ausgehend von diesem. Die Richtung der Schwerkraft begünstigt eine Kontaktierung zur Bodenplatte 20 hin.

Bei den in den Figuren 25 bis 32 dargestellten Ausführungsformen kann die Wärmeaustrageeinrichtung 40 wenigstens ein Element 46 mit dem Kopplungsbereich 42 aufweisen, bei dem der Kopplungsbereich 42 im Wesentlichen eine gesamte Länge des Elements 46 in dem Aufnahmeraum 14 und/oder einen gesamten Umfang des Elements 46 und/oder einen gesamten Umfang des Elements 46 in dem Aufnahmeraum 14 umfasst.

Der Kopplungsbereich 42 kann dabei sich über mindestens 50%, insbesondere über mindestens 60% einer gesamten Höhe des Aufnahmeraums 14 erstrecken.

Ein Element 46 oder der Kopplungsbereich 42 des Elements 46 kann beabstandet zu der Einhausung 16 sein. Insbesondere kann ein Ende des Elements 46 beabstandet zu einem Deckel 28 und/oder den Boden der Einhausung 16 sein.

Ein Element 46 oder der Kopplungsbereich 42 des Elements 46 kann parallel zu einem Element 36 der Wärmeeintrageeinrichtung 30 ausgerichtet sein.

Ein Element 46 oder der Kopplungsbereich 42 des Elements 46 kann parallel zu einer Höhenachse L oder Symmetrieachse des Aufnahmeraums 14 ausgerichtet sein.

Ein Element 46 oder der Kopplungsbereich 42 des Elements 46 kann zentral in dem Aufnahmeraum 14 angeordnet sein und insbesondere an einer Symmetrieachse des Aufnahmeraums 14 liegen.

Das wenigstens eine Element 46 kann zylindrisch ausgebildet und insbesondere als Rohr 52 ausgebildet sein.

Das wenigstens eine Element 46 kann zentral in dem Aufnahmeraum 14 angeordnet sein und insbesondere entlang einer Symmetrieachse des Aufnahmeraums 14 angeordnet sein.

Figur 25 zeigt in einer isometrischen Darstellung eine nicht umfasste Wärmespeichervorrichtung 100 mit flächig ausgedehnter Wärmeeintrageeinrichtung 30 in der Bodenplatte 20 und zylindrischer Wärmeaustrageeinrichtung 40 im Aufnahmeraum 14. In Figur 26 ist eine solche Wärmespeichervorrichtung in einer Schnittdarstellung dargestellt.

Die flächig ausgedehnte Wärmeeintrageeinrichtung 30 ist mit zwei Elementen 36 realisiert. Die zylindrisch als ein Rohr 52 realisierte Wärmeaustrageeinrichtung 40 ist senkrecht in Schwererichtung S mit wenigstens einem Bereich 48 im Speichermaterial 10 angeordnet. Abschnitte 38 der Wärmeeintrageeinrichtung 30 sind zu beiden Seiten der Wärmeaustrageeinrichtung 40 angeordnet. Die Wärmeaustrageeinrichtung 40 kann beispielsweise von unten durch die Bodenplatte 20 in die Einhausung 16 eingebracht werden.

Der Kopplungsbereich 42 der Wärmeaustrageeinrichtung 40 ist hierbei wenigstens bereichsweise innerhalb des Aufnahmeraums 14 angeordnet ist, insbesondere wenigstens bereichsweise innerhalb der Aufnahmekammer 12 angeordnet.

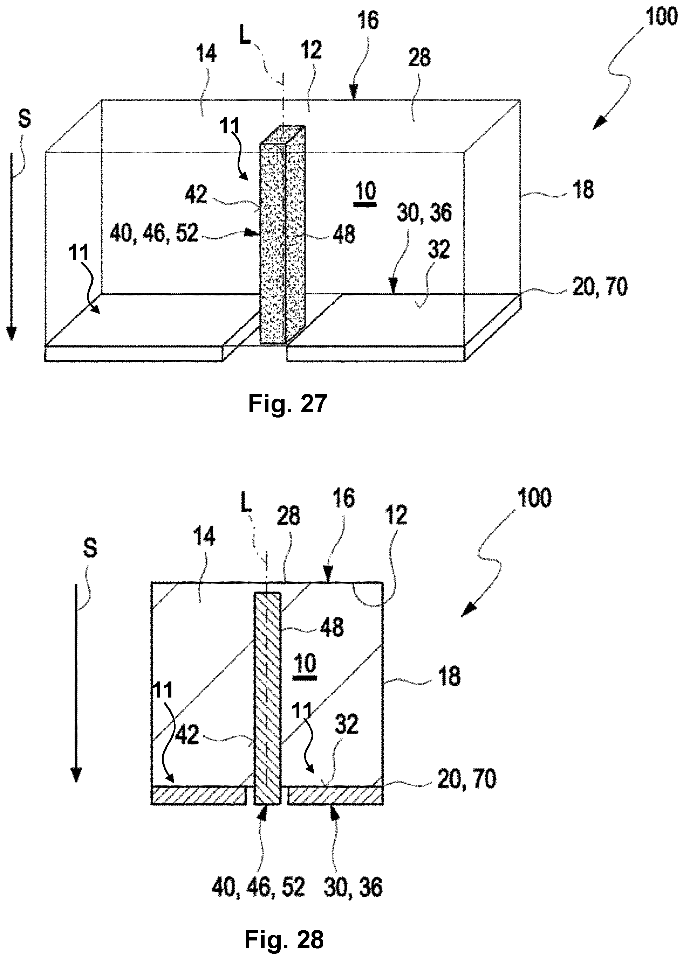

Figur 27 zeigt in einer isometrischen Darstellung eine nicht umfasste Wärmespeichervorrichtung 100 mit flächig ausgedehnter Wärmeeintrageeinrichtung 30 in der Bodenplatte 20 und quaderförmiger Wärmeaustrageeinrichtung 40 im Aufnahmeraum 14. In Figur 28 ist eine solche Wärmespeichervorrichtung 100 in einer Schnittdarstellung dargestellt.

Die Anordnung der Wärmeeintrageeinrichtung 30 ist gleich wie bei dem Ausführungsbeispiel in den Figuren 25 und 26. Die quaderförmig realisierte Wärmeaustrageeinrichtung 40 ist senkrecht in Schwererichtung S mit wenigstens einem Bereich 48 im Speichermaterial 10 angeordnet. Abschnitte 38 der Wärmeeintrageeinrichtung 30 sind zu beiden Seiten der Wärmeaustrageeinrichtung 40 angeordnet. Die Wärmeaustrageeinrichtung 40 kann beispielsweise von unten durch die Bodenplatte 20 in die Einhausung 16 und damit in das Speichermaterial 10 eingebracht werden.

Bei den in den Figuren 25 bis 28 dargestellten nicht umfassten Ausführungsbeispielen kann die Wärmeeintrageeinrichtung 30 in dem Aufnahmeraum 14 wenigstens mit einem Abschnitt 38 die Wärmeaustrageeinrichtung 34 umgeben. insbesondere konzentrisch und/oder geschlossen umgeben.

Weiter kann die Wärmeeintrageeinrichtung 30 in thermischem Kontakt und/oder mechanischem Kontakt mit der Wärmeaustrageeinrichtung 40 in dem Aufnahmeraum 14 stehen, was auch bei den in den anderen Figuren dargestellten Ausführungsformen der Fall sein kann.

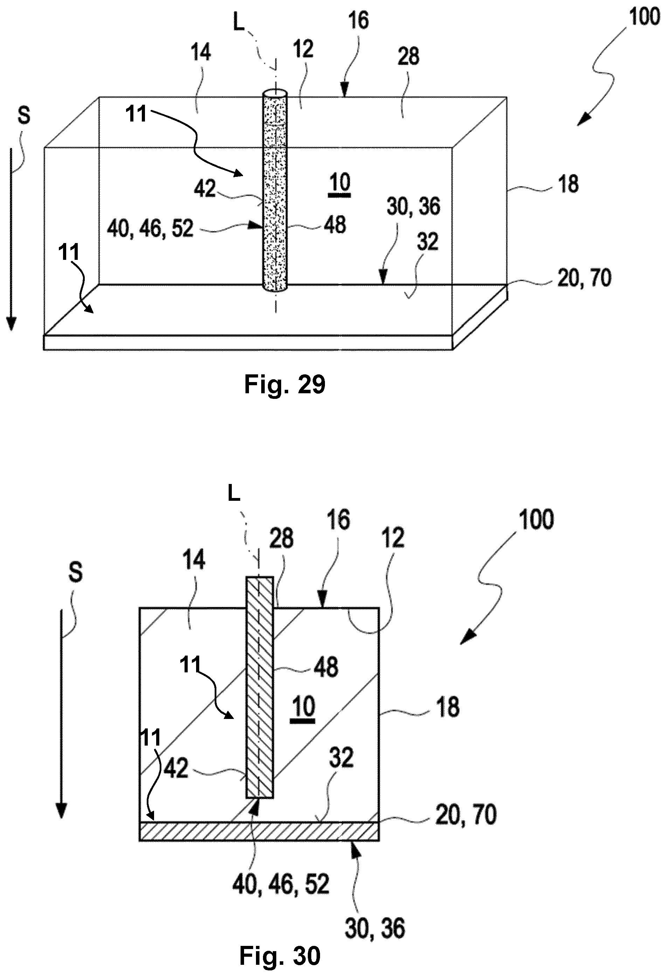

Figur 29 zeigt in einer isometrischen Darstellung eine nicht umfasste Wärmespeichervorrichtung 100 mit flächig ausgedehnter Wärmeeintrageeinrichtung 30 in der Bodenplatte 20 und zylindrischer Wärmeaustrageeinrichtung 40 im Aufnahmeraum 14. In Figur 30 ist eine solche Wärmespeichervorrichtung 100 in einer Schnittdarstellung.

Die Wärmeeintrageeinrichtung 30 umfasst ein einzelnes Element, welche in der Bodenplatte 20 der Einhausung 16 integriert ist. Die Wärmeaustrageeinrichtung 40 ist zylindrisch ausgebildet und als einzelnes Rohr 52 realisiert. Die Wärmeaustrageeinrichtung 40 ist beispielsweise von oben in die Einhausung 16 und damit in das Speichermaterial 10 eingebracht.

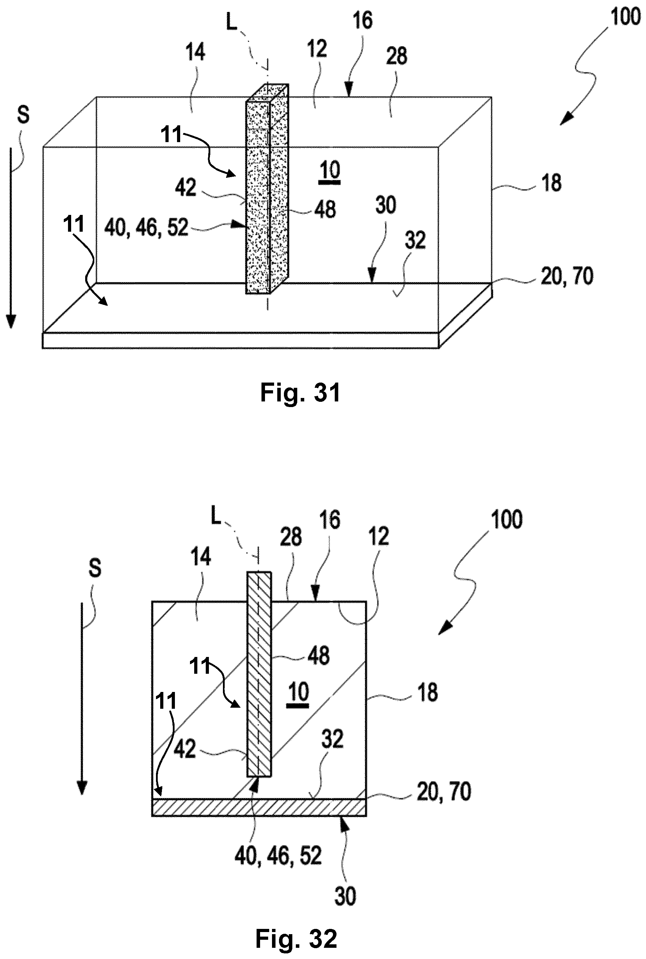

Figur 31 zeigt in einer isometrischen Darstellung eine nicht umfasste Wärmespeichervorrichtung 100 mit flächig ausgedehnter Wärmeeintrageeinrichtung 30 in der Bodenplatte 20 und quaderförmiger Wärmeaustrageeinrichtung 40 im Aufnahmeraum 14. In Figur 32 ist eine solche Wärmespeichervorrichtung 100 in einer Schnittdarstellung dargestellt.

Die Anordnung der Wärmeeintrageeinrichtung 30 ist gleich wie bei dem Ausführungsbeispiel in den Figuren 29 und 30. Die Wärmeaustrageeinrichtung 40 ist quaderförmig ausgebildet und als einzelnes Element realisiert. Die Wärmeaustrageeinrichtung 40 ist beispielsweise von oben in die Einhausung 16 und damit in das Speichermaterial 10 eingebracht.

Bei den in den Figuren 13 bis 32 dargestellten nicht umfassten Ausführungsbeispielen sind die Wärmeeintrageeinrichtung 30 wenigstens teilweise in dem Aufnahmeraum 14 beabstandet zu der Wärmeaustrageeinrichtung 40, wobei Speichermaterial 10 zwischen der Wärmeeintrageeinrichtung 30 und der Wärmeaustrageeinrichtung 40 angeordnet ist.

Alternativ kann die Wärmeeintrageeinrichtung 30, bzw. die Wärmeaustrageeinrichtung 40 jeweils an die Bodenplatte 20 angrenzend ausgebildet sein.

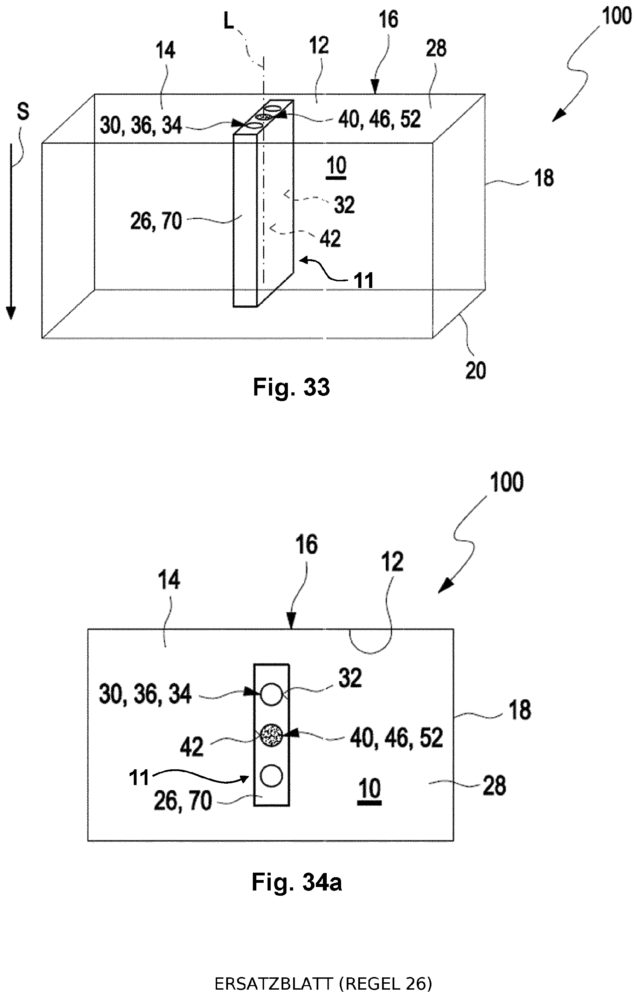

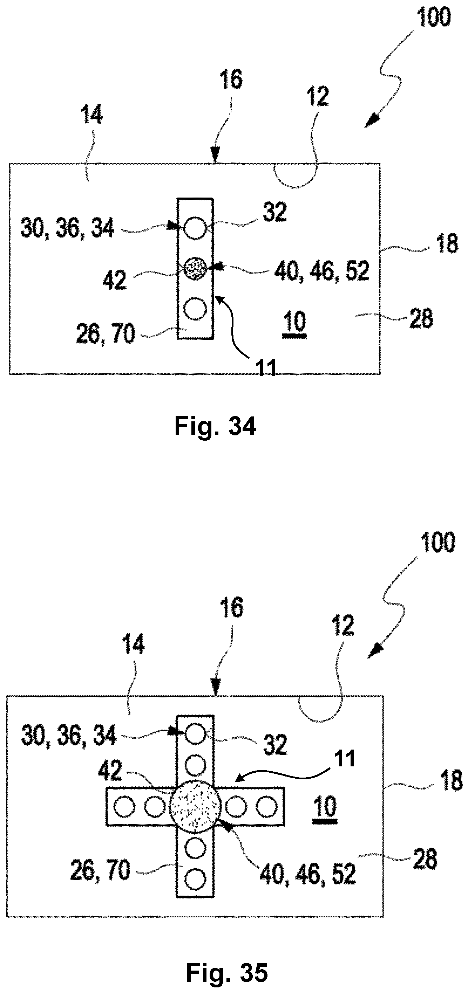

Figur 33 zeigt in einer isometrischen Darstellung eine Wärmespeichervorrichtung 100 mit zylindrischer Wärmeeintrageeinrichtung 30 und zylindrischer Wärmeaustrageeinrichtung 40 in einem Gehäuse 26 im Aufnahmeraum 14. Figur 34 zeigt dazu in einer Draufsicht die Wärmespeichervorrichtung 100 mit linear angeordneter Wärmeeintrageeinrichtung 30 und Wärmeaustrageeinrichtung 40 in dem Gehäuse 26.

In den Figuren 35 bis 39 sind weitere Ausführungsbeispiele einer solchen Anordnung dargestellt.

Bei den in den Figuren 33 bis 39 dargestellten Ausführungsform werden Wärmeeintrageeinrichtung 30 und Wärmeaustrageeinrichtung 40 nicht direkt in das Speichermaterial 10 eingebracht, sondern in ein Gehäuse 26 als Wärmebrückenelement 70, das wiederum in das Speichermaterial 10 eingebracht ist.

Hierdurch brauchen Wärmeeintrageeinrichtung 30 und Wärmeaustrageeinrichtung 40 selbst nicht werkstoffverträglich mit dem Speichermaterial 10 ausgeführt sein. Lediglich das Gehäuse 26 muss eine Werkstoffverträglichkeit gegenüber dem Speichermaterial 10 aufweisen. Durch die Einbringung von Wärmeeintrageeinrichtung 30 und Wärmeaustrageeinrichtung 40 in dem gleichen Gehäuse 26 erfolgt bevorzugt eine Erstarrung des Speichermaterials 10 um das Gehäuse 26 herum. Hierdurch ist sowohl für die Wärmeeintrageeinrichtung 30 als auch für die Wärmeaustrageeinrichtung 40 ein guter thermischer Kontakt mit dem Speichermaterial 10 sichergestellt.

Der Kopplungsbereich 32, 42 von Wärmeeintrageeinrichtung 30 und Wärmeaustrageeinrichtung 40 ist bei diesen Ausführungsbeispielen in dem Gehäuse 26 angeordnet. Das Gehäuse 26, welches als Wärmebrückenelement 70 dient, ist wiederum wenigstens bereichsweise innerhalb der Aufnahmekammer 12 und dem Aufnahmeraum 14 angeordnet.

In dem Gehäuse 26 kann beispielsweise zentral ein Element 36 der Wärmeeintrageeinrichtung 30 angeordnet sein, und beabstandet zu diesem Element 36 eine Mehrzahl von Elementen 46, insbesondere von Rohren 52, der Wärmeaustrageeinrichtung 40 positioniert sein. Insbesondere können die Elemente 46 der Wärmeaustrageeinrichtung 40 spiegelsymmetrisch oder rotationssymmetrisch zu dem Element 36 der Wärmeeintrageeinrichtung 30 angeordnet sein. Alternativ kann auch ein Element 46 der Wärmeaustrageeinrichtung 40 zentral angeordnet sein, welches beabstandet von Elementen 36 der Wärmeeintrageeinrichtung 30 umgeben sein kann.

Bei dem in den Figuren 33 und 34 dargestellten Ausführungsbeispiel ist in dem Gehäuse 26 ein zentrales Element 46, insbesondere ein zentrales Rohr 52, der Wärmeaustrageeinrichtung 40 angeordnet. Beabstandet zu dem Element 46 sind zwei zylindrisch ausgebildete Elemente 36 der Wärmeeintrageeinrichtung 30 angeordnet. Die Elemente 36 der Wärmeeintrageeinrichtung 30 sind dabei spiegelsymmetrisch zu dem Element 46 in einer Reihe angeordnet. Die Elemente 36 und 46 sind alle parallel zueinander ausgerichtet.

Figur 35 zeigt in einer Draufsicht die Wärmespeichervorrichtung 100 mit kreuzförmig angeordneter Wärmeeintrageeinrichtung 30 und zentraler Wärmeaustrageeinrichtung 40 in einem Gehäuse 26. Jeweils zwei zylindrisch ausgebildete Elemente 36 der Wärmeeintrageeinrichtung 30 sind als Arme eines Kreuzes mit dem einzelnen zylindrischen Element 46 der Wärmeaustrageeinrichtung 40 im Kreuzungspunkt angeordnet. Die Elemente 36 und 46 sind alle parallel zueinander ausgerichtet.

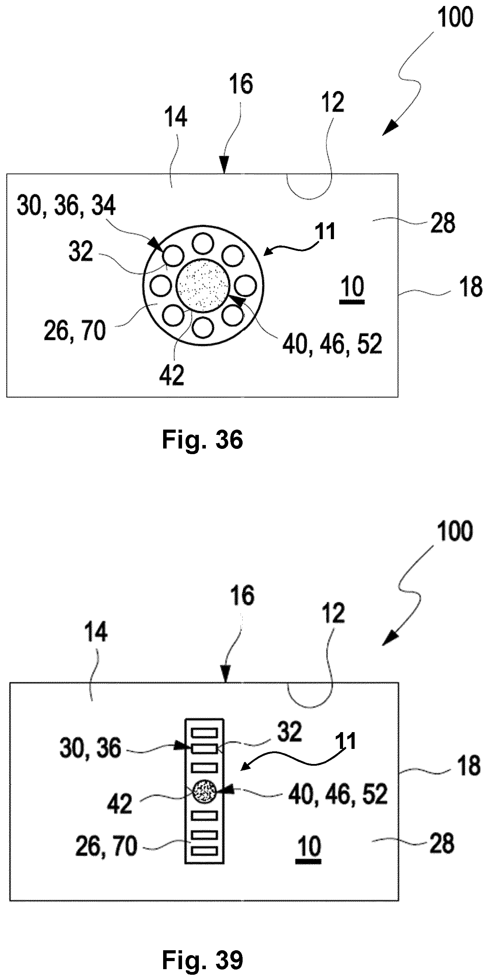

Figur 36 zeigt in einer Draufsicht eine Wärmespeichervorrichtung 100 mit koaxial angeordneter Wärmeeintrageeinrichtung 30 und Wärmeaustrageeinrichtung 40 in einem Gehäuse 26. Die Wärmeeintrageeinrichtung 30 weist ein zentral angeordnetes zylindrisches Element 36 auf, welches in einem Kreis von zylindrischen Elementen 46 der Wärmeaustrageeinrichtung 40 umgeben ist. Die Elemente 36 und 46 sind alle parallel zueinander ausgerichtet.

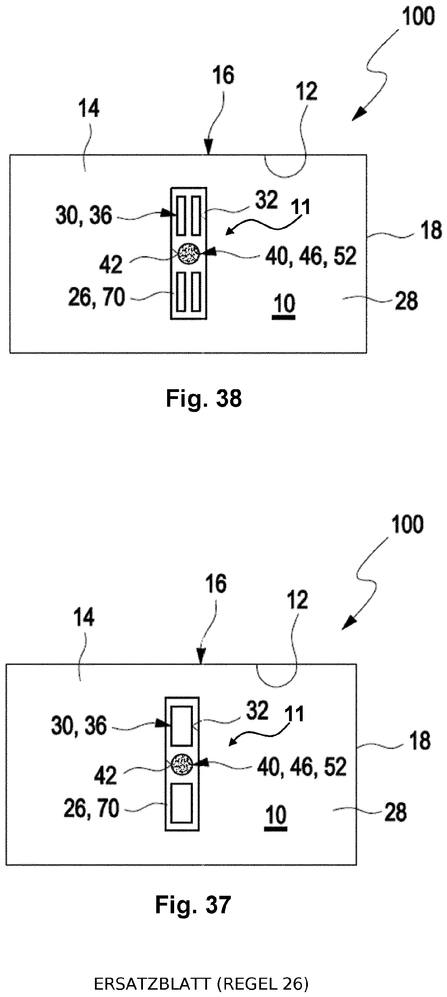

Figur 37 zeigt in einer Draufsicht eine Wärmespeichervorrichtung 100 mit linear angeordneter Wärmeeintrageeinrichtung 30 und Wärmeaustrageeinrichtung 40 in einem Gehäuse 26.

Ein Element 46 der Wärmeaustrageeinrichtung 40 ist zentral in dem Gehäuse 26 angeordnet und von zwei flächig ausgebildeten Elementen 36 der Wärmeeintrageeinrichtung 30, welche in einer Reihe, senkrecht stehend, parallel zu dem Element 46 angeordnet sind.

Figur 38 zeigt in einer Draufsicht eine Wärmespeichervorrichtung 100 mit linear angeordneter Wärmeeintrageeinrichtung 30 und Wärmeaustrageeinrichtung 40 in einem Gehäuse 26. Das in Figur 38 dargestellte Ausführungsbeispiel ist ähnlich ausgebildet wie das in Figur 37 dargestellte Ausführungsbeispiel. In Figur 38 sind lediglich jeweils zwei Elemente 36 der Wärmeeintrageeinrichtung 30 parallel zueinander zu beiden Seiten des Elements 46 der Wärmeaustrageeinrichtung 40 dargestellt.

Figur 39 zeigt in einer Draufsicht eine Wärmespeichervorrichtung 100 mit linear angeordneter Wärmeeintrageeinrichtung 30 und Wärmeaustrageeinrichtung 40 in einem Gehäuse 26. In diesem Ausführungsbeispiel sind jeweils drei stabförmig ausgebildete Elemente 36 der Wärmeeintrageeinrichtung 30 in Reihe parallel zueinander gegenüber liegend einem zentralen zylindrischen Element 46 der Wärmeaustrageeinrichtung 40 angeordnet.

## Patentansprüche

1. Wärmespeichervorrichtung (100), mit einem metallischen Phasenwechselmaterial als Speichermaterial (10), umfassend wenigstens eine Aufnahmekammer (12) mit einem Aufnahmeraum (14) für das Speichermaterial (10) und eine Einhausung (16) für den Aufnahmeraum (14), wenigstens eine Wärmeeintrageeinrichtung (30) zum Eintragen von Wärme in die wenigstens eine Aufnahmekammer (12), und wenigstens eine Wärmeaustrageeinrichtung (40) zum Austragen von Wärme aus der wenigstens einen Aufnahmekammer (12),
wobei ein zur thermischen Kopplung mit dem Speichermaterial (10) vorgesehener Kopplungsbereich (32) der Wärmeeintrageeinrichtung (30) und/oder ein zur thermischen Kopplung mit dem Speichermaterial (10) vorgesehener Kopplungsbereich (42) der Wärmeaustrageeinrichtung (40) zum Speichermaterial (10) zumindest bereichsweise beabstandet angeordnet ist,
**dadurch gekennzeichnet, dass**
der Kopplungsbereich (32) der Wärmeeintrageeinrichtung (30) und der Kopplungsbereich (42) der Wärmeaustrageeinrichtung (40) außerhalb des Aufnahmeraums (14) an einem Boden der Einhausung (16) angeordnet sind,
wobei der Kopplungsbereich (32, 42) der Wärmeeintrageeinrichtung (30) und/oder der Wärmeaustrageeinrichtung (40) über mindestens ein Wärmebrückenelement (70) thermisch mit dem Speichermaterial (10) gekoppelt ist,
wobei die Einhausung (16) das mindestens eine Wärmebrückenelement (70) aufweist,
oder dass
der Kopplungsbereich (32, 42) von Wärmeeintrageeinrichtung (30) und Wärmeaustrageeinrichtung (40) in einem Gehäuse (26) angeordnet ist,
wobei das Gehäuse (26) wenigstens bereichsweise innerhalb der Aufnahmekammer (12) und/oder dem Aufnahmeraum (14) angeordnet ist.

2. Wärmespeichervorrichtung nach Anspruch 1, **dadurch gekennzeichnet, dass** das mindestens eine Wärmebrückenelement (70) an einer Bodenplatte (20) der Einhausung (16) angeordnet oder in die Bodenplatte (20) integriert ist,
oder die Bodenplatte (20) realisiert.

3. Wärmespeichervorrichtung nach Anspruch 1 oder 2, **dadurch gekennzeichnet,**
**dass** der Kopplungsbereich (32) der Wärmeeintrageeinrichtung (30) an einer von der Einhausung (16) abgewandten Seite (22) des Kopplungsbereichs (42) der Wärmeaustrageeinrichtung (40) angeordnet ist oder dass der Kopplungsbereich (42) der Wärmeaustrageeinrichtung (40) an einer von der Einhausung (16) abgewandten Seite (22) des Kopplungsbereichs (32) der Wärmeeintrageeinrichtung (30) angeordnet ist.

4. Wärmespeichervorrichtung nach einem der vorhergehenden Ansprüche, **dadurch gekennzeichnet, dass**,
wenn der Kopplungsbereich (32, 42) von Wärmeeintrageeinrichtung (30) und Wärmeaustrageeinrichtung (40) in einem Gehäuse (26) angeordnet ist, wobei das Gehäuse (26) wenigstens bereichsweise innerhalb der Aufnahmekammer (12) und/oder dem Aufnahmeraum (14) angeordnet ist,
in dem Gehäuse (26) ein zentrales Element (46), insbesondere ein zentrales Rohr (52), der Wärmeaustrageeinrichtung (40) angeordnet ist, und beabstandet zu dem Element (46) Elemente (36) der Wärmeeintrageeinrichtung (30) angeordnet sind, wobei insbesondere die Elemente (36) der Wärmeeintrageeinrichtung (30) spiegelsymmetrisch oder rotationssymmetrisch zu dem Element (46) angeordnet sind.

5. Wärmespeichervorrichtung nach einem der vorhergehenden Ansprüche, **dadurch gekennzeichnet, dass**,
wenn der Kopplungsbereich (32, 42) von Wärmeeintrageeinrichtung (30) und Wärmeaustrageeinrichtung (40) in einem Gehäuse (26) angeordnet ist, wobei das Gehäuse (26) wenigstens bereichsweise innerhalb der Aufnahmekammer (12) und/oder dem Aufnahmeraum (14) angeordnet ist,
in dem Gehäuse (26) zentral ein Element (36) der Wärmeeintrageeinrichtung (30) angeordnet ist, und beabstandet zu diesem Element (36) eine Mehrzahl von Elementen (46), insbesondere von Rohren (52), der Wärmeaustrageeinrichtung (40) positioniert sind, wobei insbesondere die Elemente (46) der Wärmeaustrageeinrichtung (40) spiegelsymmetrisch oder rotationssymmetrisch zu dem Element (36) der Wärmeeintrageeinrichtung (30) angeordnet sind.

6. Wärmespeichervorrichtung nach einem der vorhergehenden Ansprüche, **dadurch gekennzeichnet, dass**
die Wärmeeintrageeinrichtung (30) wenigstens ein Element (36) mit dem Kopplungsbereich (32) aufweist, mit wenigstens einer der Ausgestaltungen:
der Kopplungsbereich (32) umfasst im Wesentlichen eine gesamte Länge des Elements (36) in dem Aufnahmeraum (14) und/oder einen gesamten Umfang des Elements (36) und/oder einen gesamten Umfang des Elements (36) in dem Aufnahmeraum (14);
der Kopplungsbereich (32) erstreckt sich über mindestens 50%, insbesondere über mindestens 60% einer gesamten Höhe des Aufnahmeraums (14);
das Element (36) oder der Kopplungsbereich (32) des Elements (36) ist beabstandet zu der Einhausung (16) und insbesondere ist ein Ende des Elements (36) beabstandet zu einem Deckel (28) und/oder einem Boden der Einhausung (16);
das Element (36) oder der Kopplungsbereich (32) des Elements (36) ist parallel zu einem Element (46) der Wärmeaustrageeinrichtung (40) ausgerichtet;
das Element (36) oder der Kopplungsbereich (32) des Elements (36) ist parallel zu einer Höhenachse (L) oder Symmetrieachse des Aufnahmeraums (14) ausgerichtet;
das Element (36) oder der Kopplungsbereich (32) des Elements (36) ist zentral in dem Aufnahmeraum (14) angeordnet und liegt insbesondere an einer Symmetrieachse des Aufnahmeraums (14).

7. Wärmespeichervorrichtung nach Anspruch 6, **dadurch gekennzeichnet, dass** das wenigstens eine Element (36) schräg, insbesondere senkrecht, zu einer Ausrichtung der wenigstens einen Wärmeaustrageeinrichtung (40), und/oder im bestimmungsgemäßen Arbeitszustand parallel zu einer Schwererichtung (S) angeordnet ist,
oder dass das wenigstens eine Element (36) parallel zu einer Ausrichtung der wenigstens einen Wärmeaustrageeinrichtung (40) angeordnet ist.

8. Wärmespeichervorrichtung nach einem nach einem vorhergehenden der Ansprüche, **dadurch gekennzeichnet, dass**
die Wärmeaustrageeinrichtung (40) wenigstens ein Element (46) mit dem Kopplungsbereich (42) aufweist, mit wenigstens einer der Ausgestaltungen:
der Kopplungsbereich (42) umfasst im Wesentlichen eine gesamte Länge des Elements (46) in dem Aufnahmeraum (14) und/oder einen gesamten Umfang des Elements (46) und/oder einen gesamten Umfang des Elements (46) in dem Aufnahmeraum (14);
der Kopplungsbereich (42) erstreckt sich über mindestens 50%, insbesondere über mindestens 60% einer gesamten Höhe des Aufnahmeraums (14);
das Element (46) oder der Kopplungsbereich (42) des Elements (46) ist beabstandet zu der Einhausung (16) und insbesondere ist ein Ende des Elements (46) beabstandet zu einem Deckel (28) und/oder einem Boden der Einhausung (16);
das Element (46) oder der Kopplungsbereich (42) des Elements (46) ist parallel zu einem Element (36) der Wärmeeintrageeinrichtung (30) ausgerichtet;
das Element (46) oder der Kopplungsbereich (42) des Elements (46) ist parallel zu einer Höhenachse (L) oder Symmetrieachse des Aufnahmeraums (14) ausgerichtet;
das Element (46) oder der Kopplungsbereich (42) des Elements (46) ist zentral in dem Aufnahmeraum (14) angeordnet und liegt insbesondere an einer Symmetrieachse des Aufnahmeraums (14).

9. Wärmespeichervorrichtung nach Anspruch 8, **dadurch gekennzeichnet, dass** das wenigstens eine Element (46) als Rohr (52) ausgebildet ist.

10. Wärmespeichervorrichtung nach Anspruch 8 oder 9, **dadurch gekennzeichnet, dass**
das wenigstens eine Element (46) zentral in dem Aufnahmeraum (14) angeordnet ist und insbesondere entlang einer Symmetrieachse des Aufnahmeraums (14) angeordnet ist.

11. Wärmespeichervorrichtung nach einem der vorhergehenden Ansprüche, **dadurch gekennzeichnet, dass**
die Wärmeeintrageeinrichtung (30) in dem Aufnahmeraum (14) wenigstens mit einem Abschnitt (38) die Wärmeaustrageeinrichtung (34) umgibt, insbesondere konzentrisch und/oder geschlossen umgibt, insbesondere in thermischem Kontakt und/oder mechanischem Kontakt mit der Wärmeaustrageeinrichtung (40) in dem Aufnahmeraum (14) steht.

12. Wärmespeichervorrichtung nach einem der vorhergehenden Ansprüche, **dadurch gekennzeichnet, dass**
die Wärmeeintrageeinrichtung (30) wenigstens teilweise in dem Aufnahmeraum (14) beabstandet zu der Wärmeaustrageeinrichtung (40) ist, wobei Speichermaterial (10) zwischen der Wärmeeintrageeinrichtung (30) und der Wärmeaustrageeinrichtung (40) angeordnet ist.

13. Wärmespeichervorrichtung nach einem der vorhergehenden Ansprüche, **dadurch gekennzeichnet, dass** das Speichermaterial (50) eine metallische Legierung umfasst mit einem oder mehreren der Bestandteile Aluminium, Silizium, Kupfer, Magnesium, Zink, Germanium, insbesondere eine AISi-Legierung, bevorzugt AlSi₁₂.

14. Wärmespeichervorrichtung nach einem der vorhergehenden Ansprüche, **dadurch gekennzeichnet, dass** die Wärmeeintrageeinrichtung (30) wenigstens eine Heizeinrichtung (34) aufweist, insbesondere wobei die Heizeinrichtung (34) eine elektrische Widerstandsheizung oder induktive Heizung aufweist.

15. Wärmespeichervorrichtung nach einem der vorhergehenden Ansprüche, **dadurch gekennzeichnet, dass** die Wärmeaustrageeinrichtung (40) wenigstens ein Rohr (52) umfasst oder damit verbunden ist, welches von einem Wärmeübertragungsmedium (58) durchströmt ist.

## Claims

1. Heat-storage apparatus (100) which has a metallic phase-change material as a storage material (10), comprising at least one receiving chamber (12), which has a receiving space (14) for the storage material (10), and an enclosure (16) for the receiving space (14), at least one heat-input device (30) for introducing heat into the at least one receiving chamber (12), and at least one heat-output device (40) for discharging heat from the at least one receiving chamber (12),
wherein a coupling region (32), intended for thermal coupling to the storage material (10), of the heat-input device (30) and/or a coupling region (42), intended for thermal coupling to the storage material (10), of the heat-output device (40) is arranged spaced apart at least regionally from the storage material (10),
**characterized in that**
the coupling region (32) of the heat-input device (30) and the coupling region (42) of the heat-output device (40) are arranged outside the receiving chamber (14) on a base of the enclosure (16),
wherein the coupling region (32, 42) of the heat-input device (30) and/or of the heat-output device (40) is coupled thermally to the storage material (10) via at least one thermal-bridge element (70),
wherein the enclosure (16) has the at least one thermal-bridge element (70),
or **in that**
the coupling region (32, 42) of the heat-input device (30) and of the heat-output device (40) is arranged in a housing (26),
wherein the housing (26) is arranged at least regionally within the receiving chamber (12) and/or the receiving space (14).

2. Heat-storage apparatus according to Claim 1, **characterized in that**
the at least one thermal-bridge element (70) is arranged on a base plate (20) of the enclosure (16) or is integrated into the base plate (20),
or realizes the base plate (20).

3. Heat-storage apparatus according to Claim 1 or 2, **characterized in**
**that** the coupling region (32) of the heat-input device (30) is arranged on a side (22) of the coupling region (42) of the heat-output device (40) that faces away from the enclosure (16), or in that the coupling region (42) of the heat-output device (40) is arranged on a side (22) of the coupling region (32) of the heat-input device (30) that faces away from the enclosure (16).

4. Heat-storage apparatus according to one of the preceding claims, **characterized in that**,
if the coupling region (32, 42) of the heat-input device (30) and of the heat-output device (40) is arranged in a housing (26), wherein the housing (26) is arranged at least regionally within the receiving chamber (12) and/or the receiving space (14),
in the housing (26), there is arranged a central element (46) of the heat-output device (40), in particular a central tube (52) thereof, and, spaced apart from the element (46), there are arranged elements (36) of the heat-input device (30), wherein in particular the elements (36) of the heat-input device (30) are arranged mirror-symmetrically or rotationally symmetrically with respect to the element (46).

5. Heat-storage apparatus according to one of the preceding claims, **characterized in that**,
if the coupling region (32, 42) of the heat-input device (30) and of the heat-output device (40) is arranged in a housing (26), wherein the housing (26) is arranged at least regionally within the receiving chamber (12) and/or the receiving space (14),
in the housing (26), there is arranged centrally an element (36) of the heat-input device (30) and, spaced from said element (36), there are positioned a plurality of elements (46) of the heat-output device (40), in particular tubes (52) thereof, wherein in particular the elements (46) of the heat-output device (40) are arranged mirror-symmetrically or rotationally symmetrically with respect to the element (36) of the heat-input device (30).

6. Heat-storage apparatus according to one of the preceding claims, **characterized in that**
the heat-input device (30) has at least one element (36) with the coupling region (32) having at least one of the configurations:
the coupling region (32) comprises substantially an entire length of the element (36) in the receiving space (14) and/or an entire periphery of the element (36) and/or an entire periphery of the element (36) in the receiving space (14);
the coupling region (32) extends over at least 50%, in particular over at least 60%, of an entire height of the receiving space (14);
the element (36) or the coupling region (32) of the element (36) is spaced apart from the enclosure (16) and, in particular, one end of the element (36) is spaced apart from a cover (28) and/or a base of the enclosure (16);
the element (36) or the coupling region (32) of the element (36) is oriented parallel to an element (46) of the heat-output device (40);
the element (36) or the coupling region (32) of the element (36) is oriented parallel to a vertical axis (L) or an axis of symmetry of the receiving space (14);
the element (36) or the coupling region (32) of the element (36) is arranged centrally in the receiving space (14) and is situated in particular at an axis of symmetry of the receiving space (14).

7. Heat-storage apparatus according to Claim 6, **characterized in that** the at least one element (36) is arranged at an angle, in particular perpendicularly, to an orientation of the at least one heat-output device (40) and/or, in the intended working state, parallel to a direction of gravitational force (S),
or **in that** the at least one element (36) is arranged parallel to an orientation of the at least one heat-output device (40).

8. Heat-storage apparatus according to one of the preceding claims, **characterized in that**
the heat-output device (40) has at least one element (46) with the coupling region (42) having at least one of the configurations:
the coupling region (42) comprises substantially an entire length of the element (46) in the receiving space (14) and/or an entire periphery of the element (46) and/or an entire periphery of the element (46) in the receiving space (14);
the coupling region (42) extends over at least 50%, in particular over at least 60%, of an entire height of the receiving space (14);
the element (46) or the coupling region (42) of the element (46) is spaced apart from the enclosure (16) and, in particular, one end of the element (46) is spaced apart from a cover (28) and/or a base of the enclosure (16) ;
the element (46) or the coupling region (42) of the element (46) is oriented parallel to an element (36) of the heat-input device (30);
the element (46) or the coupling region (42) of the element (46) is oriented parallel to a vertical axis (L) or an axis of symmetry of the receiving space (14);
the element (46) or the coupling region (42) of the element (46) is arranged centrally in the receiving space (14) and is situated in particular at an axis of symmetry of the receiving space (14).

9. Heat-storage apparatus according to Claim 8, **characterized in that** the at least one element (46) is in the form of a tube (52).

10. Heat-storage apparatus according to Claim 8 or 9, **characterized in that**
the at least one element (46) is arranged centrally in the receiving space (14) and is arranged in particular along an axis of symmetry of the receiving space (14).

11. Heat-storage apparatus according to one of the preceding claims, **characterized in that**
the heat-input device (30), in the receiving space (14), at least by way of a portion (38), surrounds the heat-output device (34), in particular surrounds the latter concentrically and/or in a closed manner, in particular is in thermal contact and/or mechanical contact with the heat-output device (40) in the receiving space (14).

12. Heat-storage apparatus according to one of the preceding claims, **characterized in that**
the heat-input device (30) is spaced apart from the heat-output device (40) at least partially in the receiving space (14), wherein storage material (10) is arranged between the heat-input device (30) and the heat-output device (40).

13. Heat-storage apparatus according to one of the preceding claims, **characterized in that** the storage material (50) comprises a metallic alloy with one or more of the constituents aluminium, silicon, copper, magnesium, zinc, germanium, in particular an AlSi alloy, preferably AlSi₁₂.

14. Heat-storage apparatus according to one of the preceding claims, **characterized in that** the heat-input device (30) has at least one heating device (34), in particular wherein the heating device (34) has an electric resistance heater or inductive heater.

15. Heat-storage apparatus according to one of the preceding claims, **characterized in that** the heat-output device (40) comprises or is connected to at least one tube (52) through which a heat-transfer medium (58) flows.

## Revendications

1. Dispositif d'accumulation de chaleur (100) avec un matériau métallique à changement de phase en tant que matériau d'accumulation (10), comprenant au moins une chambre de réception (12) avec un espace de réception (14) pour le matériau d'accumulation (10) et une enceinte (16) pour l'espace de réception (14), au moins un appareil d'apport de chaleur (30) pour apporter de la chaleur dans l'au moins une chambre de réception (12), et au moins un appareil d'évacuation de chaleur (40) pour évacuer de la chaleur de l'au moins une chambre de réception (12),
une zone de couplage (32) de l'appareil d'apport de chaleur (30) prévue pour le couplage thermique avec le matériau d'accumulation (10) et/ou une zone de couplage (42) de l'appareil d'évacuation de chaleur (40) prévue pour le couplage thermique avec le matériau d'accumulation (10) étant agencées à distance au moins par zones du matériau d'accumulation (10),
**caractérisé en ce que**
la zone de couplage (32) de l'appareil d'apport de chaleur (30) et la zone de couplage (42) de l'appareil d'évacuation de chaleur (40) sont agencées à l'extérieur de l'espace de réception (14) sur un fond de l'enceinte (16),
la zone de couplage (32, 42) de l'appareil d'apport de chaleur (30) et/ou de l'appareil d'évacuation de chaleur (40) étant couplée thermiquement au matériau d'accumulation (10) par l'intermédiaire d'au moins un élément de pont thermique (70),
l'enceinte (16) présentant l'au moins un élément de pont thermique (70),
ou **en ce que**
la zone de couplage (32, 42) de l'appareil d'apport de chaleur (30) et de l'appareil d'évacuation de chaleur (40) est agencée dans un boîtier (26),
le boîtier (26) étant agencé au moins par zones à l'intérieur de la chambre de réception (12) et/ou de l'espace de réception (14).

2. Dispositif d'accumulation de chaleur selon la revendication 1, **caractérisé en ce que**
l'au moins un élément de pont thermique (70) est agencé sur une plaque de fond (20) de l'enceinte (16) ou intégré dans la plaque de fond (20),
ou réalise la plaque de base (20).

3. Dispositif d'accumulation de chaleur selon la revendication 1 ou 2, **caractérisé en ce que**
la zone de couplage (32) de l'appareil d'apport de chaleur (30) est agencée sur un côté (22) de la zone de couplage (42) de l'appareil d'évacuation de chaleur (40) détourné de l'enceinte (16) ou **en ce que** la zone de couplage (42) de l'appareil d'évacuation de chaleur (40) est agencée sur un côté (22) de la zone de couplage (32) de l'appareil d'apport de chaleur (30) détourné de l'enceinte (16).

4. Dispositif d'accumulation de chaleur selon l'une quelconque des revendications précédentes, **caractérisé en ce que**
lorsque la zone de couplage (32, 42) de l'appareil d'apport de chaleur (30) et de l'appareil d'évacuation de chaleur (40) est agencée dans un boîtier (26), le boîtier (26) étant agencé au moins par zones à l'intérieur de la chambre de réception (12) et/ou de l'espace de réception (14),
un élément central (46), notamment un tube central (52), de l'appareil d'évacuation de chaleur (40) est agencé dans le boîtier (26), et des éléments (36) de l'appareil d'apport de chaleur (30) sont agencés à distance de l'élément (46), les éléments (36) de l'appareil d'apport de chaleur (30) étant notamment agencés en symétrie miroir ou en symétrie de rotation par rapport à l'élément (46).

5. Dispositif d'accumulation de chaleur selon l'une quelconque des revendications précédentes, **caractérisé en ce que**
lorsque la zone de couplage (32, 42) de l'appareil d'apport de chaleur (30) et de l'appareil d'évacuation de chaleur (40) est agencée dans un boîtier (26), le boîtier (26) étant agencé au moins par zones à l'intérieur de la chambre de réception (12) et/ou de l'espace de réception (14),
un élément (36) de l'appareil d'apport de chaleur (30) est agencé au centre dans le boîtier (26), et une pluralité d'éléments (46), notamment de tubes (52), de l'appareil d'évacuation de chaleur (40) sont positionnés à distance de cet élément (36), les éléments (46) de l'appareil d'évacuation de chaleur (40) étant notamment agencés en symétrie miroir ou en symétrie de rotation par rapport à l'élément (36) de l'appareil d'apport de chaleur (30).

6. Dispositif d'accumulation de chaleur selon l'une quelconque des revendications précédentes, **caractérisé en ce que**
l'appareil d'apport de chaleur (30) présente au moins un élément (36) avec la zone de couplage (32), avec au moins l'une des configurations suivantes :
la zone de couplage (32) comprend essentiellement une longueur totale de l'élément (36) dans l'espace de réception (14) et/ou une circonférence totale de l'élément (36) et/ou une circonférence totale de l'élément (36) dans l'espace de réception (14) ;
la zone de couplage (32) s'étend sur au moins 50 %, notamment sur au moins 60 % d'une hauteur totale de l'espace de réception (14) ;
l'élément (36) ou la zone de couplage (32) de l'élément (36) est espacé(e) de l'enceinte (16) et, notamment, une extrémité de l'élément (36) est espacée d'un couvercle (28) et/ou d'un fond de l'enceinte (16) ;
l'élément (36) ou la zone de couplage (32) de l'élément (36) est orienté(e) parallèlement à un élément (46) de l'appareil d'évacuation de chaleur (40) ;
l'élément (36) ou la zone de couplage (32) de l'élément (36) est orienté(e) parallèlement à un axe vertical (L) ou à un axe de symétrie de l'espace de réception (14) ;
l'élément (36) ou la zone de couplage (32) de l'élément (36) est agencé(e) au centre dans l'espace de réception (14) et se situe notamment sur un axe de symétrie de l'espace de réception (14).

7. Dispositif d'accumulation de chaleur selon la revendication 6, **caractérisé en ce que**
l'au moins un élément (36) est agencé obliquement, notamment perpendiculairement, par rapport à une orientation de l'au moins un appareil d'évacuation de chaleur (40), et/ou parallèlement à une direction de gravité (S) dans l'état de fonctionnement conforme,
ou **en ce que** l'au moins un élément (36) est agencé parallèlement à une orientation de l'au moins un appareil d'évacuation de chaleur (40).

8. Dispositif d'accumulation de chaleur selon l'une quelconque des revendications précédentes, **caractérisé en ce que**
l'appareil d'évacuation de chaleur (40) présente au moins un élément (46) avec la zone de couplage (42), avec au moins l'une des configurations suivantes :
la zone de couplage (42) comprend essentiellement une longueur totale de l'élément (46) dans l'espace de réception (14) et/ou une circonférence totale de l'élément (46) et/ou une circonférence totale de l'élément (46) dans l'espace de réception (14) ;
la zone de couplage (42) s'étend sur au moins 50 %, notamment sur au moins 60 % d'une hauteur totale de l'espace de réception (14) ;
l'élément (46) ou la zone de couplage (42) de l'élément (46) est espacé(e) de l'enceinte (16) et, notamment, une extrémité de l'élément (46) est espacée d'un couvercle (28) et/ou d'un fond de l'enceinte (16) ;
l'élément (46) ou la zone de couplage (42) de l'élément (46) est aligné(e) parallèlement à un élément (36) de l'appareil d'apport de chaleur (30) ;
l'élément (46) ou la zone de couplage (42) de l'élément (46) est orienté(e) parallèlement à un axe vertical (L) ou à un axe de symétrie de l'espace de réception (14) ;
l'élément (46) ou la zone de couplage (42) de l'élément (46) est agencé(e) au centre dans l'espace de réception (14) et se situe notamment sur un axe de symétrie de l'espace de réception (14).

9. Dispositif d'accumulation de chaleur selon la revendication 8, **caractérisé en ce que**
l'au moins un élément (46) est réalisé sous forme de tube (52).

10. Dispositif d'accumulation de chaleur selon la revendication 8 ou 9, **caractérisé en ce que**
l'au moins un élément (46) est agencé au centre dans l'espace de réception (14) et est agencé notamment le long d'un axe de symétrie de l'espace de réception (14).

11. Dispositif d'accumulation de chaleur selon l'une quelconque des revendications précédentes, **caractérisé en ce que**
l'appareil d'apport de chaleur (30) entoure l'appareil d'évacuation de chaleur (34) dans l'espace de réception (14) au moins par une section (38), notamment de manière concentrique et/ou fermée, notamment est en contact thermique et/ou mécanique avec l'appareil d'évacuation de chaleur (40) dans l'espace de réception (14).

12. Dispositif d'accumulation de chaleur selon l'une quelconque des revendications précédentes, **caractérisé en ce que**
l'appareil d'apport de chaleur (30) est au moins partiellement espacé de l'appareil d'évacuation de chaleur (40) dans l'espace de réception (14), un matériau d'accumulation (10) étant agencé entre l'appareil d'apport de chaleur (30) et l'appareil d'évacuation de chaleur (40).

13. Dispositif d'accumulation de chaleur selon l'une quelconque des revendications précédentes, **caractérisé en ce que** le matériau d'accumulation (50) comprend un alliage métallique avec un ou plusieurs des constituants aluminium, silicium, cuivre, magnésium, zinc, germanium, notamment un alliage AlSi, de préférence AlSi₁₂.

14. Dispositif d'accumulation de chaleur selon l'une quelconque des revendications précédentes, **caractérisé en ce que** l'appareil d'apport de chaleur (30) présente au moins un appareil de chauffage (34), l'appareil de chauffage (34) présentant notamment un chauffage électrique à résistance ou un chauffage inductif.

15. Dispositif d'accumulation de chaleur selon l'une quelconque des revendications précédentes, **caractérisé en ce que** l'appareil d'évacuation de chaleur (40) comprend au moins un tube (52) ou est relié à celui-ci, qui est traversé par un fluide caloporteur (58).
